# EUROPÄISCHE PATENTSCHRIFT

(11) **EP 3 590 235 B1**
(45) Veröffentlichungstag und Bekanntmachung des Hinweises auf die Patenterteilung: **13.05.2020**
(21) Anmeldenummer: 19708440.3
(22) Anmeldetag: 26.02.2019
(51) Int. Cl.: H04L 12/40, H04L 12/46

(54) **DATENÜBERTRAGUNGSVERFAHREN UND AUTOMATISIERUNGSKOMMUNIKATIONSNETZWERK**
DATA TRANSMISSION METHOD AND AUTOMATION COMMUNICATION NETWORK
PROCÉDÉ DE TRANSMISSION DE DONNÉES ET RÉSEAU DE COMMUNICATION D'AUTOMATISATION

(30) Priorität: 23.05.2018 DE 102018112357
(43) Veröffentlichungstag der Anmeldung: 08.01.2020
(73) Patentinhaber: Beckhoff Automation GmbH, 33415 Verl (DE)
(72) Erfinder: BUNTE, Thorsten, 33335 Gütersloh (DE); BUETTNER, Holger, 12157 Berlin (DE); JANSSEN, Dirk, 33415 Verl (DE); RETTIG, Thomas, 33378 Rheda-Wiedenbrückk (DE); VONNAHME, Erik, 33154 Salzkotten (DE); BECKHOFF, Hans, 33415 Verl (DE)
(74) Vertreter: Patentanwaltskanzlei WILHELM & BECK
(86) Internationale Anmeldenummer: PCT/EP2019/054661
(87) Internationale Veröffentlichungsnummer: WO 2019/223913

(56) Entgegenhaltungen:
- DE-A1-102014 112 082
- US-A1- 2002 064 157
- US-A1- 2009 049 215

## Beschreibung

Die vorliegende Erfindung betrifft ein Verfahren zur Datenübertragung in einem Automatisierungskommunikationsnetzwerk. Die Erfindung betrifft des Weiteren ein Automatisierungskommunikationsnetzwerk, das zur Datenübertragung ausgelegt ist.

Die deutsche Prioritätsanmeldung DE 10 2018 112 357.4, die ausdrücklich einen Teil der Offenbarung der vorliegenden Anmeldung bildet, beschreibt ebenfalls ein Verfahren zur Datenübertragung in einem Automatisierungskommunikationsnetzwerk und ein Automatisierungskommunikationsnetzwerk.

Ein sogenanntes "local area network" (LAN) ist ein räumlich begrenztes Netzwerk, in dem verschiedene Netzwerkkomponenten miteinander gekoppelt sind. Bei den Netzwerkkomponenten kann es sich um einen oder mehrere Server und Arbeitsstationen, sogenannte Knoten, handeln, die über Kommunikationsleitungen in Form von Koaxial-, Glasfaser- oder Twisted-Pair-Kabeln miteinander verbunden sind. Die Kommunikation zwischen den Netzwerkkomponenten innerhalb des LANs erfolgt auf Basis von Netzwerkprotokollen.

Die veröffentlichte Patentanmeldung DE 10 2014 112 082 offenbart einen Verteilerknoten für ein Automatisierungskommunikationsnetzwerk. Dabei stellt das Ethernet-Protokoll den am weitesten verbreiteten Standard der Netzwerkprotokolle für ein LAN dar. Ethernet-Telegramme können einen Nutzdatenblock mit einer Länge von 1500 Bytes umfassen und Telegramm-Übertragungsraten zwischen den einzelnen Netzwerkkomponenten innerhalb des LANs von einigen Gigabytes/Sekunde ermöglichen, wobei die Telegramme paketorientiert übertragen werden. In Form des sogenannten "Industrial Ethernet" findet das Ethernet-Protokoll auch in industriellen Fertigungsanlagen Anwendung. In der Automatisierungstechnik kann das Ethernet-Protokoll beispielsweise dazu dienen, den Datenaustausch in der Fertigungs-, Gebäude- und Prozessautomatisierung in Bezug auf Steuerungsaufgaben zu regeln und die Echtzeitfähigkeit des Systems zu gewähren.

Die in der Automatisierungstechnik eingesetzten Automatisierungskommunikationsnetzwerke entsprechen in der Regel sogenannten "Feldbussystemen". Feldbussysteme sind Bussysteme, bei denen dezentral angeordnete Geräte einer Maschinenperipherie wie Eingangs- und/oder Ausgangs-Module, Antriebe und Bedienterminals über das Bussystem mit Steuereinheiten verbunden sind. Für die Datenübertragung steht ein gemeinsamer Übertragungskanal (zum Beispiel in Form des Feldbusses oder als Funkstrecke) zur Verfügung. Senden mehrere Teilnehmer gleichzeitig Telegramme aus, so muss eine Möglichkeit geschaffen werden, dass sich die Teilnehmer im gegenseitigen Einvernehmen den Übertragungskanal teilen. Eine Möglichkeit bildet die Anwendung des sogenannten "Master-Slave-Prinzips".

In der Regel bilden die Steuereinheiten am Feldbus die aktiven Busteilnehmer, die im Folgenden als "Master-Teilnehmer" bezeichnet werden. Die Master-Teilnehmer verfügen über die Zugriffsberechtigung des Feldbussystems und legen den Datenverkehr in Form von Telegrammen auf dem Feldbus fest. Die passiven Feldbusteilnehmer, die nachfolgend als "Slave-Teilnehmer" bezeichnet werden, entsprechen meist den Maschinenperipheriegeräten. Die Slave-Teilnehmer verfügen über keine Zugriffsberechtigung und können empfangene Daten bzw. Telegramme nur quittieren oder auf Anfrage eines Master-Teilnehmers Daten bzw. Telegramme übertragen.

Häufig werden in Automatisierungskommunikationsnetzwerken Verteilerknoten, sogenannte "Switches" eingesetzt, um die einzelnen Netzwerksegmente mit Netzwerkkomponenten miteinander zu verbinden und dafür Sorge zu tragen, dass die Daten bzw. Telegramme innerhalb der Netzwerksegmente rasch an ihr Ziel gelangen. Bei den im Automatisierungskommunikationsnetzwerk zu übertragenen Telegrammen kann es sich um zyklische Echtzeit-Telegramme, die für die Steuerung des Automatisierungssystems relevant sind und zyklische Ein-/Ausgabedaten der Teilnehmer umfassen, und um azyklische Nicht-Echtzeit-Telegramme, die beispielsweise Parameter- oder Statusdaten der Teilnehmer umfassen, handeln. Zyklische Echtzeit-Telegramme sind in der Regel geplante Telegramme mit festem Sendezeitpunkt für die Übertragung durch die Verteilerknoten, wohingegen azyklische Nicht-Echtzeit-Telegramme häufig ungeplant im Telegrammverkehr auftreten und keinen festen Sendezeitpunkt für die Übertragung aufweisen.

Für die Weiterleitung der geplanten, zyklischen Echtzeit-Telegramme ist im Verteilerknoten eine Vermittlungstabelle, eine sogenannte "Routing-Liste", hinterlegt, die eine Telegrammkennung, beispielsweise in Form einer MAC-Adresse, eine Ein-/Ausgabe-Schnittstelle und einen Sendezeitpunkt aufweist. Die "Routing-Liste" für die ungeplanten, azyklischen Nicht-Echtzeit-Telegramme umfasst im Unterschied zur beschriebenen "Routing-Liste" für die geplanten zyklischen Telegramme keinen Sendezeitpunkt, da die ungeplanten azyklischen Telegramme keinen festen Sendezeitpunkt aufweisen.

Damit der Weiterleitungsvorgang von Nicht-Echtzeit-Telegrammen, die im Folgenden als ungeplante Telegramme bezeichnet werden, den Weiterleitungsvorgang von Echtzeit-Telegrammen, die im Folgenden als geplante Telegramme bezeichnet werden, nicht verzögert, ist ein Datenübermittlungszyklus für die Telegramme im Verteilerknoten in der US 8,179,923 B2 in drei Zeitabschnitte gegliedert.

In einem ersten Zeitabschnitt, dem sogenannten "zyklischen Zeitabschnitt", dürfen nur geplante Telegramme empfangen und weitergeleitet werden. In dem daran anschließenden zweiten Zeitabschnitt, dem sogenannten "azyklischen Zeitabschnitt", werden dann die ungeplanten Telegramme übertragen. In dem dritten und letzten Zeitabschnitt, dem sogenannten "Übergangszeitabschnitt", dürfen zwar weiterhin azyklische Telegramme empfangen, jedoch nicht weitergeleitet werden.

Der Übergangszeitabschnitt, der wenigstens der maximalen Weiterleitungs-Zeitdauer für ein ungeplantes Telegramm entspricht, verhindert, dass es in dem daran anschließenden nächsten zyklischen Zeitabschnitt zu einer verzögerten Übertragung von geplanten Telegrammen durch einen aktuell noch andauernden Weiterleitungsvorgang eines ungeplanten, azyklischen Telegramms kommt. Die im Übergangszeitabschnitt empfangenen ungeplanten, azyklischen Telegramme werden im Verteilerknoten zwischengespeichert und im nächsten azyklischen Zeitabschnitt übertragen.

Im Verteilerknoten kann es leicht zu einer Überlastsituation der ungeplanten Telegramme kommen, da jeder Verteilerknoten unkontrolliert ungeplante Telegramme außerhalb des zyklischen Zeitabschnitts, zum Beispiel innerhalb des azyklischen Zeitabschnitts, versenden kann. Insbesondere treten solche Überlastsituationen dann auf, wenn der azyklische Zeitabschnitt im Telegramm- bzw. Datenübermittlungszyklus gegenüber dem zyklischen Zeitabschnitt stark verkürzt ist. Aufgrund der Laufzeiten innerhalb des Automatisierungskommunikationsnetzwerks und zur Erreichung möglichst kurzer Totzeiten bei der Telegramm- bzw. Datenübertragung, werden die geplanten Telegramme oft nicht unmittelbar nacheinander im zyklischen Zeitabschnitt übertragen, sondern mit dazwischen liegenden Zeitlücken. Dadurch verlängert sich der zyklische Zeitabschnitt. In einem solchen Fall besteht dann die Gefahr, dass wenn in dem Übergangszeitabschnitt und in dem azyklischen Zeitabschnitt zu viele ungeplante Telegramme empfangen werden, der Empfangspuffer für die ungeplanten Telegramme im Verteilerknoten überläuft.

Des Weiteren ist es nach der in der US 8,179,923 B2 beschriebenen Vorgehensweise erforderlich, das Automatisierungskommunikationsnetzwerk mit dem Verteilerknoten in einer Konfigurationsphase voreinzustellen. Gibt es Änderungen bei den geplanten Telegrammen, die in dem zyklischen Zeitabschnitt weitergeleitet werden, so muss eine neue Konfiguration erstellt und im Verteilerknoten gespeichert werden. Werden in dem Automatisierungskommunikationsnetzwerk mehrere Verteilerknoten eingesetzt, so muss die neue Konfiguration zudem an die Verteilerknoten übermittelt werden. Das heißt, dass eine solche Konfigurationsänderung mehrere Datenübertragungszyklen in Anspruch nehmen kann. Die ungeplanten Telegramme können in der US 8,179,923 B2 nur in der azyklischen Phase übertragen werden. Ein ungeplantes Telegramm wird dann in dem Zeitfenster, in dem keine geplanten Telegramme gesendet werden, vollständig übertragen. Nachteilig an dem Verfahren der US 8,179,923 B2 ist dabei jedoch, dass das ungeplante Telegramm eine Telegrammlänge besitzen muss, die maximal dem verbleibenden Zeitfenster bis zur Übertragung des nächsten geplanten Telegramms entspricht, damit das azyklische Telegramm in diesem freien Zeitfenster gesendet werden kann.

Es ist daher Aufgabe der vorliegenden Erfindung, ein Verfahren zur Datenübertragung in einem Automatisierungskommunikationsnetzwerk mit wenigstens einem Verteilerknoten anzugeben, das den Durchsatz von Telegrammen im Verteilerknoten, insbesondere von ungeplanten Telegrammen, effizient gestaltet. Es ist weiterhin Aufgabe der Erfindung, ein verbessertes Automatisierungskommunikationsnetzwerk anzugeben.

Diese Aufgabe wird durch die Merkmale der unabhängigen Ansprüche gelöst. Weitere vorteilhafte Ausführungsformen der Erfindung sind in den abhängigen Ansprüchen angegeben.

Erfindungsgemäß werden ein Verfahren zur Datenübertragung in einem Automatisierungskommunikationsnetzwerk mit wenigstens einem Verteilerknoten sowie ein entsprechendes Automatisierungskommunikationsnetzwerk vorgeschlagen. Der Verteilerknoten weist mehrere Ein-/Ausgabe-Schnittstellen auf, die jeweils zumindest mit einem Netzwerksegment in Verbindung stehen, wobei in einem ersten Netzwerksegment im Automatisierungskommunikationsnetzwerk ein erster Teilnehmer und in einem zweiten Netzwerksegment ein zweiter Teilnehmer angeordnet sind. Ein Datenaustausch zwischen dem ersten Teilnehmer und dem zweiten Teilnehmer erfolgt in Form von Telegrammen, wobei die Telegramme als geplante Telegramme, die durch einen festen Sendezeitpunkt für die Übertragung durch den wenigstens einen Verteilerknoten ausgezeichnet sind und als ungeplante Telegramme, die ohne einen festen Sendezeitpunkt für die Übertragung durch den wenigstens einen Verteilerknoten ausgezeichnet sind, verwirklicht sind. Den ungeplanten Telegrammen sind jeweils Steuerdaten für den Verteilerknoten zugeordnet und die Steuerdaten weisen ein Datenfeld auf, das der Verteilerknoten bearbeitet. Der Verteilerknoten ist ausgelegt, das ungeplante Telegramm auf einer Ein-/Ausgabe-Schnittstelle zu empfangen und auf einer weiteren Ein-/Ausgabe-Schnittstelle zu senden. Weiterhin ist der Verteilerknoten ausgelegt, eine Sende-Zeitdauer für die Übertragung des ungeplanten Telegramms zu ermitteln, und ein bis zu einer Übertragung eines nächsten geplanten Telegramms verbleibendes Zeitfenster der Ein-/Ausgabe-Schnittstelle zu bestimmen, wobei die Ein-/Ausgabe-Schnittstelle als die Sende-Schnittstelle für das ungeplante Telegramm vorgesehen ist. Ferner prüft der Verteilerknoten, ob das Telegramm mit der Sende-Zeitdauer innerhalb des verbleibenden Zeitfensters übertragbar ist. Der Verteilerknoten ist ausgelegt, das ungeplante Telegramm über die Sende-Schnittstelle zu übertragen, wenn das ungeplante Telegramm mit der Sende-Zeitdauer innerhalb des verbleibenden Zeitfensters der Sende-Schnittstelle bis zur Übertragung des nächsten geplanten Telegramms übertragbar ist. Der Verteilerknoten trägt vor dem Übertragen des ungeplanten Telegramms im Datenfeld der Steuerdaten des Telegramms eine erste Telegramminformation ein. Die erste Telegramminformation zeigt an, dass das ungeplante Telegramm vollständig übertragen wird. Der Verteilerknoten ist überdies ausgebildet, das ungeplante Telegramm zu fragmentieren, wenn das Telegramm mit der Sende-Zeitdauer nicht innerhalb des verbleibenden Zeitfensters der Sende-Schnittstelle bis zur Übertragung des nächsten geplanten Telegramms übertragbar ist. Des Weiteren trägt der Verteilerknoten vor dem Übertragen des ungeplanten Telegramms im Datenfeld der Steuerdaten des ungeplanten Telegramms eine zweite Telegramminformation ein, wobei die zweite Telegramminformation anzeigt, dass das ungeplante Telegramm fragmentiert wird und eine zusätzliche Verteilerknoten-Identifikation umfasst.

Das erfindungsgemäße Automatisierungskommunikationsnetzwerk kann beispielsweise in der Automatisierungstechnik Anwendung finden, um Daten bzw. geplante und ungeplante Telegramme zwischen den einzelnen Netzwerk-Teilnehmern mithilfe von Verteilerknoten auszutauschen. Hierbei kann das erfindungsgemäße Verfahren zur Datenübertragung vorteilhaft im Automatisierungskommunikationsnetzwerk eingesetzt werden, da der Verteilerknoten anhand von gespeicherten Informationen über die geplanten Telegramme, deren Sendezeitpunkte in der Regel vom ersten Teilnehmer für die einzelnen Verteilerknoten festgelegt werden, weiß, wie lange eine entsprechende Datenübertragungsstrecke zu einem übergeordneten Verteilerknoten beispielsweise auf einem Rückweg des ungeplanten Telegramms, von dem zweiten Teilnehmer zu dem ersten Teilnehmer, noch frei ist. Das heißt, das verbleibende Zeitfenster der Sende-Schnittstelle des jeweiligen Verteilerknotens bis zur Übertragung des nächsten geplanten Telegramms ist bekannt, bzw. kann einfach ermittelt werden und hieraus entschieden werden, ob ein ungeplantes Telegramm mit der Sende-Zeitdauer innerhalb des oben genannten Zeitfensters der Sende-Schnittstelle des Verteilerknotens vollständig oder in Fragmente unterteilt übertragen werden kann.

Vorteilhaft kann sich also bei der erfindungsgemäßen Vorgehensweise die Möglichkeit auswirken, dass ungeplante Telegramme, die nicht innerhalb des verbleibenden Zeitfensters der Sende-Schnittstelle des Verteilerknotens bis zur Übertragung des nächsten geplanten Telegramms zurück zum ersten Teilnehmer übertragbar sind, vom Verteilerknoten fragmentiert werden können. Der Verteilerknoten trägt dazu vor dem Übertragen des ungeplanten Telegramms eine zweite Telegramminformation in den Steuerdaten des ungeplanten Telegramms ein, die anzeigt, dass das ungeplante Telegramm fragmentiert worden ist. Zudem weist die zweite Telegramminformation die Verteilerknoten-Identifikation auf. Fragmentiert der Verteilerknoten das ungeplante Telegramm hingegen nicht, da das ungeplante Telegramm mit der Sende-Zeitdauer während des verbleibenden Zeitfensters der Sende-Schnittstelle des Verteilerknotens bis zur Übertragung des nächsten geplanten Telegramms übertragbar ist, so erzeugt der Verteilerknoten die erste Telegramminformation, die anzeigt, dass das ungeplante Telegramm vollständig übertragen wird.

Somit kann die erfindungsgemäße Vorgehensweise eine optimale Nutzung des möglichen freien Zeitfensters der Sende-Schnittstelle des Verteilerknotens bis zur Übertragung des nächsten geplanten Telegramms erlauben und den Vorteil bieten, dass sie die Totzeit bei der Telegramm- bzw. Datenübertragung auf ein Minimum reduziert. Die Gefahr des Überlaufens des Empfangspuffers des Verteilerknotens durch die eintreffenden ungeplanten Telegramme kann zudem mithilfe der fragmentierten Übertragung der ungeplanten Telegramme reduziert werden.

Gemäß einer Ausführungsform sind zwischen dem ersten Teilnehmer und dem zweiten Teilnehmer mehrere Verteilerknoten angeordnet. Dem jeweiligen Verteilerknoten ist ein separates Datenfeld der Steuerdaten des ungeplanten Telegramms zugeordnet, das der jeweilige Verteilerknoten eigenständig bearbeitet. Der jeweilige Verteilerknoten fragmentiert das ungeplante Telegramm, das von dem zweiten Teilnehmer an den ersten Teilnehmer übertragen wird, wenn das ungeplante Telegramm mit der jeweiligen Sende-Zeitdauer nicht innerhalb des verbleibenden Zeitfensters der Sende-Schnittstelle zur Übertragung des nächsten geplanten Telegramms durch den jeweiligen Verteilerknoten übertragbar ist. Zusätzlich trägt der jeweilige Verteilerknoten vor dem Übertragen des ungeplanten Telegramms in dem ihm zugeordneten Datenfeld der Steuerdaten des ungeplanten Telegramms eine zweite Telegramminformation ein, wobei die zweite Telegramminformation anzeigt, dass das ungeplante Telegramm fragmentiert wird und eine zusätzliche Verteilerknoten-Identifikation umfasst. Anschließend überträgt der jeweilige Verteilerknoten das ungeplante Telegramm in Fragmenten. Mit der Anordnung von mehreren Verteilerknoten zwischen dem ersten und dem zweiten Teilnehmer kann ein Durchsatz von ungeplanten Telegrammen im Automatisierungskommunikationsnetzwerk zuverlässig gesteuert und Telegrammkollisionen geplanter und ungeplanter Telegramme auf diese Weise vermieden werden.

Zwischen dem ersten und dem zweiten Teilnehmer können mehrere Verteilerknoten angeordnet sein, welche die Übertragung der ungeplanten Telegramme dadurch effizienter gestalten können. Jedem Verteilerknoten ist dann ein entsprechendes separates Datenfeld in den Steuerdaten des ungeplanten Telegramms zugeordnet, in dem der jeweilige Verteilerknoten die erste Telegramminformation hinterlegt, wenn er das ungeplante Telegramm vollständig überträgt bzw. die zweite Telegramminformation, wenn der Verteilerknoten das ungeplante Telegramm fragmentiert. Auch mehrfaches Fragmentieren des ungeplanten Telegramms von verschiedenen Verteilerknoten ist eine Möglichkeit mit der die Telegramm-Übertragung verwirklicht werden kann.

Das separate Datenfeld, das dem jeweiligen Verteilerknoten zugeordnet ist, kann beliebig aufgeteilt sein, wobei sich die Struktur des Datenfelds in einem Automatisierungskommunikationsnetzwerk mit mehreren Verteilerknoten für andere Datenfelder weiterer Verteilerknoten wiederholen kann. Dies erleichtert einerseits die Programmierung bei der Implementierung der erfindungsgemäßen Vorgehensweise und sorgt zudem für eine schnellere Verarbeitung und Übertragung der Daten innerhalb des Automatisierungskommunikationsnetzwerks, wenn die Verteilerknoten lediglich den für sie relevanten Teil der Steuerdaten auswerten bzw. ergänzen müssen.

In einer weiteren Ausführungsform ermöglicht die Verteilerknoten-Identifikation der zweiten Telegramminformation eine zusätzliche Zuordnung zu dem entsprechenden ungeplanten Telegramm, wobei der Verteilerknoten ausgebildet ist, die Verteilerknoten-Identifikation der zweiten Telegramminformation für ein neues ungeplantes Telegramm zu inkrementieren. Die Verteilerknoten-Identifikation dient neben der Kennzeichnung des jeweiligen Verteilerknotens auch dazu, das entsprechende ungeplante Telegramm zu kennzeichnen. Denn die Verteilerknoten-Identifikation der jeweiligen Verteilerknoten ändert sich für mehrere Telegramm-Fragmente eines ungeplanten Telegramms nicht. Sie wird hingegen für die entsprechenden Verteilerknoten für ein neues ungeplantes Telegramm im Automatisierungskommunikationsnetzwerk inkrementiert, das heißt wertmäßig erhöht, um für weitere ungeplante Telegramme ein Unterscheidungsmerkmal zu bieten. Da die Telegrammübertragung auch derart verwirklicht sein kann, dass mehrere Verteilerknoten das ungeplante Telegramm in mehrere Telegramm-Fragmente unterteilen, kann mithilfe der Verteilerknoten-Identifikation eine hohe Flexibilität bei der Übertragung der ungeplanten Telegramme im Automatisierungskommunikationsnetzwerk und leichte Wiedererkennung der einzelnen Telegramm-Fragmente bereitgestellt werden.

In einer weiteren Ausführungsform vermerkt der jeweilige Verteilerknoten in dem ihm zugeordneten Datenfeld der Steuerdaten des ungeplanten Telegramms, in der zweiten Telegramminformation, einen Telegramm-Offset, wenn der jeweilige Verteilerknoten das ungeplante Telegramm fragmentiert. Der Telegramm-Offset gibt einen Wert n an, der eine Position eines ersten im ungeplanten Telegramm enthaltenen Nutzdatenblocks umfasst, wobei das erste Telegramm-Fragment insbesondere den Telegramm-Offset Wert n=0 aufweist. Der Telegramm-Offset erlaubt es dem nachfolgenden Verteilerknoten, an den das ungeplante, fragmentierte Telegramm gesendet wird, zügig die Position des Nutzdatenblocks zu ermitteln und somit zeitnah mit der Verarbeitung der Nutzdaten zu beginnen. Für den Empfänger kann die Struktur des ungeplanten Telegramms mithilfe des Telegramm-Offsets leicht erkennbar sein. Ein ungeplantes Telegramm, das nicht in Telegramm-Fragmente unterteilt worden ist, kann gleichermaßen den Telegramm-Offset Wert n=0 aufweisen.

Gemäß einer weiteren Ausführungsform hinterlegt der jeweilige Verteilerknoten in dem ihm zugeordneten Datenfeld der Steuerdaten des ungeplanten Telegramms, in der zweiten Telegramminformation, dass noch weitere Telegramm-Fragmente zu übertragen sind, wenn der jeweilige Verteilerknoten das ungeplante Telegramm fragmentiert. Durch die Hinterlegung der Information im Datenfeld der Steuerdaten des ungeplanten Telegramms, dass noch weitere Telegramm-Fragmente zu übertragen sind, werden die folgenden Verteilerknoten über die Fragmentierung des ungeplanten Telegramms in Kenntnis gesetzt. Sie wissen dadurch, dass einem übertragenen Telegramm-Fragment noch weitere Telegramm-Fragmente folgen können. Dies erleichtert zudem die Zusammensetzung der Telegramm-Fragmente auf der Empfängerseite und kann die Zuverlässigkeit der Telegramm- bzw. Datenübertragung erhöhen.

Gemäß einer weiteren Ausführungsform werden die Telegramme auf einem geschlossenen Datenübertragungsweg, ausgehend vom ersten Teilnehmer zum zweiten Teilnehmer, auf einem Hinweg, und zurück, ausgehend von dem zweiten Teilnehmer zu dem ersten Teilnehmer, auf einem Rückweg, übertragen. Der in dem ersten Netzwerksegment angeordnete erste Teilnehmer ist als Master-Teilnehmer verwirklicht und der in dem zweiten Netzwerksegment angeordnete zweite Teilnehmer ist als Slave-Teilnehmer verwirklicht. Der Master-Teilnehmer ist ausgebildet, den Datenaustausch zwischen dem Master-Teilnehmer und dem Slave-Teilnehmer in Form der Telegramme anzustoßen. Dabei sind die Telegramme als die geplanten Telegramme, mit dem festen Sendezeitpunkt für die Übertragung durch den wenigstens einen Verteilerknoten und als die ungeplanten Telegramme, ohne den festen Sendezeitpunkt verwirklicht. Darüber hinaus ist der Master-Teilnehmer ausgebildet, für die an den Slave-Teilnehmer auf dem Hinweg zu übertragenden ungeplanten Telegramme einen Daten-Kopfsatz zu erzeugen, der einen Steuerabschnitt und daran anschließend pro zu durchlaufendem Verteilerknoten ein separates Verteilerknoten-Datenfeld aufweist. Ferner erzeugt der Verteilerknoten, für die zu übertragenden ungeplanten Telegramme des Slave-Teilnehmers auf dem Rückweg zu dem Master-Teilnehmer einen Daten-Kopfsatz, umfassend einen Steuerabschnitt und ein Verteilerknoten-Datenfeld, wenn das ungeplante Telegramm auf dem Rückweg keinen Daten-Kopfsatz enthält. Die folgenden Verteilerknoten ergänzen für die zu übertragenden ungeplanten Telegramme den Daten-Kopfsatz des ungeplanten Telegramms um das dem jeweiligen Verteilerknoten zugeordnete Verteilerknoten-Datenfeld.

Mithilfe der Ausführung der Teilnehmer als Master-Slave-Anordnung kann die Buszugriffsberechtigung sowie der Telegramm-Durchsatz des Feldbussystems einfach umgesetzt werden. Dabei erzeugt der Master-Teilnehmer den Daten-Kopfsatz der geplanten bzw. ungeplanten Telegramme, der den Steuerabschnitt und daran anschließend das dem jeweiligen Verteilerknoten zugeordnete Verteilerknoten-Datenfeld umfasst. Der Master-Teilnehmer sendet das geplante bzw. ungeplante Telegramm mit dem genannten Daten-Kopfsatz an die entsprechenden Verteilerknoten im Automatisierungskommunikationsnetzwerk, wobei die Anzahl der einzelnen Verteilerknoten-Datenfelder des geplanten bzw. ungeplanten Telegramms eine Auskunft über die im Automatisierungskommunikationswerk für die Telegramm-Übertragung genutzten Verteilerknoten gibt. Auf dem Hinweg sendet nur der Master-Teilnehmer geplante bzw. ungeplante Telegramme an den Slave-Teilnehmer über die Verteilerknoten. Der Master-Teilnehmer verhindert auf diese Weise Telegramm-Kollisionen bei der Übertragung, da er die geplanten bzw. ungeplanten Telegramme kontrolliert an den Slave-Teilnehmer sendet.

Hingegen kann es auf dem Rückweg vorkommen, dass bei einem Automatisierungskommunikationsnetzwerk, in dem mehrere Slave-Teilnehmer angeordnet sind, mehrere Slave-Teilnehmer gleichzeitig ungeplante bzw. geplante Telegramme an den Master-Teilnehmer senden, was zu Telegramm-Kollisionen in dem jeweiligen Verteilerknoten führen kann. Der jeweilige Verteilerknoten weiß jedoch anhand von gespeicherten Informationen über die geplanten Telegramme, deren Sendezeitpunkte meist vom Master-Teilnehmer für die einzelnen Verteilerknoten festgelegt werden, wie lange eine entsprechende Datenübertragungsstrecke zu einem übergeordneten Verteilerknoten auf dem Rückweg des ungeplanten Telegramms noch frei ist. Aus diesem Grund kann der Verteilerknoten prüfen, ob das ungeplante Telegramm mit der Sende-Zeitdauer innerhalb des bis zur Übertragung des nächsten geplanten Telegramms verbleibenden Zeitfensters der Sende-Schnittstelle des Verteilerknotens übertragbar ist. Wenn dies nicht der Fall ist, so kann der jeweilige Verteilerknoten das ungeplante Telegramm auf dem Rückweg fragmentieren, und sofern das ungeplante Telegramm auf dem Rückweg keinen Daten-Kopfsatz aufweist, den Daten-Kopfsatz für das ungeplante Telegramm erzeugen. Damit ist das Fragmentieren eines ungeplanten Telegramms in der Regel auf dem Rückweg der Übertragung des ungeplanten Telegramms zurück zu dem Master-Teilnehmer erforderlich.

In dem Daten-Kopfsatz des ungeplanten Telegramms, der den oben genannten Steuerdaten entsprechen kann, kann der entsprechende Verteilerknoten die zweite Telegramminformation im Verteilerknoten-Datenfeld hinterlegen, welches dem oben beschriebenen Datenfeld entsprechen kann, wobei die zweite Telegramminformation anzeigt, dass der Verteilerknoten das ungeplante Telegramm fragmentiert hat sowie die Verteilerknoten-Identifikation umfasst. Die nachfolgenden Verteilerknoten ergänzen den Daten-Kopfsatz um das dem jeweiligen Verteilerknoten zugeordnete Verteilerknoten-Datenfeld und die erste Telegramminformation für den Fall, dass das ungeplante Telegramm vollständig übertragen wird, und die zweite Telegramminformation für den Fall, dass das ungeplante Telegramm fragmentiert wird, samt der Verteilerknoten-Identifikation des jeweiligen Verteilerknotens.

In einer weiteren Ausführungsform weist der Steuerabschnitt des ungeplanten Telegramms eine Längenangabe des ungeplanten Telegramms auf, wobei die Längenangabe des ungeplanten Telegramms die Länge des Daten-Kopfsatzes und eine Länge des Nutzdatenblocks des ungeplanten Telegramms umfasst. Die Sende-Zeitdauer des ungeplanten Telegramms wird durch die Länge des ungeplanten Telegramms bestimmt. Zur Fragmentierung des ungeplanten Telegramms ist es zunächst erforderlich, dass der erste Verteilerknoten das ungeplante Telegramm auf dem Rückweg zu dem Master-Teilnehmer vollständig empfängt, damit die Länge des ungeplanten Telegramms bekannt ist. Die nachfolgenden Verteilerknoten können die Länge des ungeplanten Telegramms aus den Steuerdaten des ungeplanten Telegramms lesen. Anhand der Telegrammlänge und des Zeitfensters der Sende-Schnittstelle bis zur Übertragung des nächsten geplanten Telegramms durch den Verteilerknoten kann der erste Verteilerknoten dann die Fragmentierung des ungeplanten Telegramms vornehmen, wobei das fragmentierte ungeplante Telegramm eine minimale Fragment-Länge für die Übertragung des fragmentierten ungeplanten Telegramms aufweist. Die einzelnen Telegramm-Fragmente können in der Telegrammlänge variieren, unterschreiten jedoch die minimale Fragment-Länge nicht. Durch die Unterbringung der Längeninformation im vordersten Bereich des ungeplanten Telegramms, also in dessen Steuerabschnitt, können die nachfolgenden Verteilerknoten zudem bereits zum frühestmöglichen Zeitpunkt entscheiden, ob das ungeplante Telegramm vollständig durch den jeweiligen Verteilerknoten durchgeleitet werden kann oder vom jeweiligen Verteilerknoten fragmentiert werden soll.

Gemäß einer weiteren Ausführungsform weist der Steuerabschnitt des ungeplanten Telegramms einen Zähler auf, der ausgehend vom Master-Teilnehmer die Anzahl der vom ungeplanten Telegramm zu durchlaufenden Verteilerknoten bis zum Slave-Teilnehmer bzw. der ausgehend vom Slave-Teilnehmer die Anzahl der vom ungeplanten Telegramm zu durchlaufenden Verteilerknoten bis zum Master-Teilnehmer anzeigt. Der Verteilerknoten dekrementiert den Zähler beim Telegrammdurchlauf auf dem Hinweg vom Master-Teilnehmer zum Slave-Teilnehmer. Ferner inkrementiert der Verteilerknoten den Zähler beim Telegrammdurchlauf auf dem Rückweg vom Slave-Teilnehmer zum Master-Teilnehmer. Mithilfe des Zählers im Steuerabschnitt des ungeplanten Telegramms wird jeder Verteilerknoten über die Anzahl der folgenden Verteilerknoten bei der Übertragung des ungeplanten Telegramms informiert. Auf diese Weise kann eine zuverlässige Telegramm- bzw. Datenübertragung bereitgestellt werden und insbesondere wird die Unterscheidung zwischen Daten-Kopfsatz und Nutzdaten des ungeplanten Telegramms möglich.

In einer weiteren Ausführungsform sind die geplanten Telegramme als zyklische Telegramme verwirklichbar, wobei die zyklischen Telegramme zur Steuerung eines Automatisierungssystems dienen können. Weiterhin können die ungeplanten Telegramme als azyklische Telegramme verwirklicht sein. Eine Unterscheidung der Telegramme in geplante, zyklische Telegramme und ungeplante, azyklische Telegramme kann sich vorteilhaft auf den Telegrammverkehr im Automatisierungsnetzwerk auswirken, da die geplanten zyklischen Telegramme in der Regel Echtzeit-Telegrammen entsprechen, die für die Steuerung des Automatisierungssystems relevant sein können, und daher einen festen Sendezeitpunkt für die Übertragung durch den wenigstens einen Verteilerknoten aufweisen. Im Unterschied dazu weisen die ungeplanten, azyklischen Telegramme, die Nicht-Echtzeit-Telegrammen entsprechen, keinen festen Sendezeitpunkt für die Übertragung auf. Folglich können ungeplante Telegramme in den Zeitfenstern in denen keine geplanten Telegramme gesendet werden, übertragen werden, ohne dass die Weiterleitung der geplanten Telegramme beeinträchtigt wird.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:

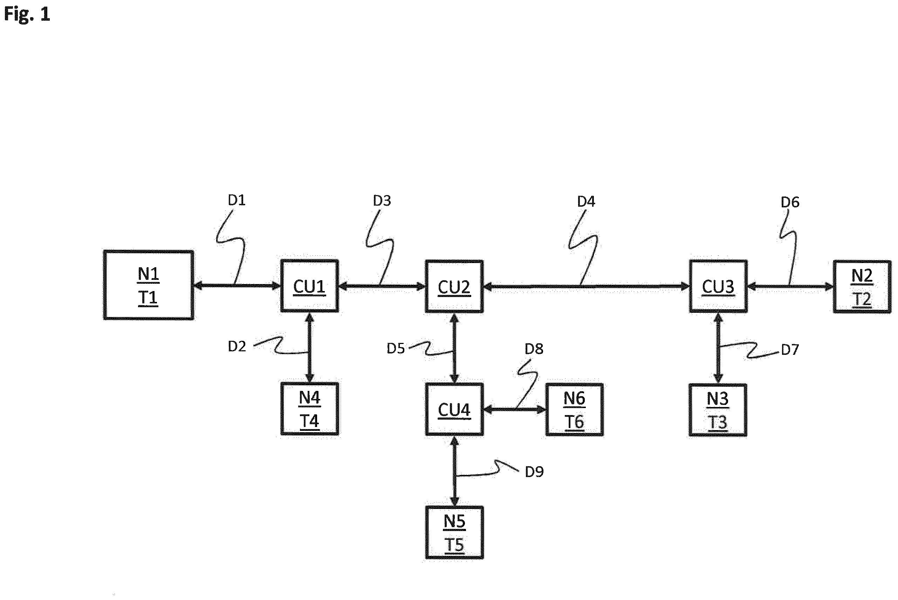

Figur 1 einen schematischen Aufbau eines Automatisierungskommunikationsnetzwerks mit mehreren Verteilerknoten und Netzwerksegmenten;

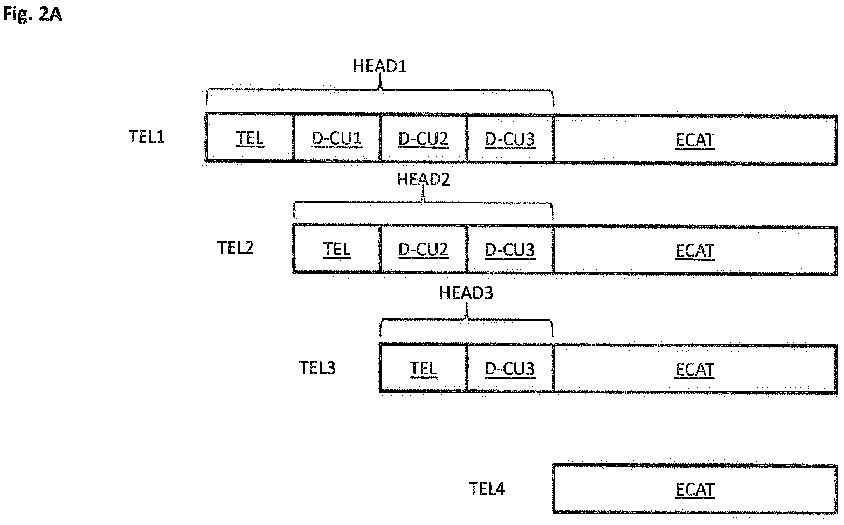

Figur 2A einen schematischen Aufbau eines ungeplanten Telegramms zum Datenaustausch zwischen dem ersten Teilnehmer und dem zweiten Teilnehmer in dem in Fig. 1 gezeigten Automatisierungskommunikationsnetzwerk, wobei zwischen den beiden Teilnehmern drei Verteilerknoten angeordnet sind und die Übertragung des ungeplanten Telegramms auf dem Hinweg zu dem zweiten Teilnehmer gezeigt ist; und

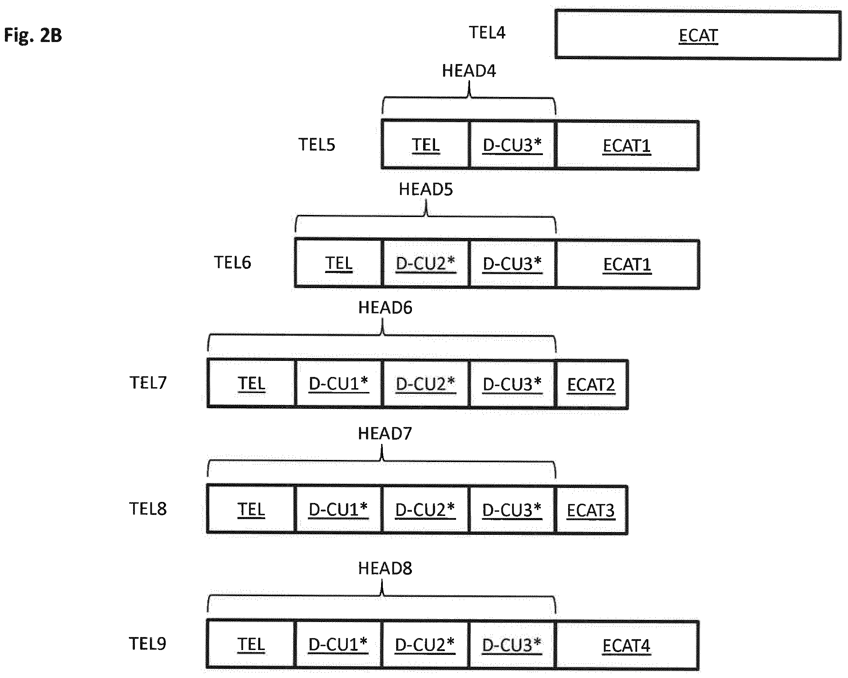

Figur 2B einen schematischen Aufbau eines ungeplanten Telegramms zum Datenaustausch zwischen dem ersten und dem zweiten Teilnehmer in dem in Fig. 1 gezeigten Automatisierungskommunikationsnetzwerk, wobei zwischen den beiden Teilnehmern drei Verteilerknoten angeordnet sind und die Übertragung des ungeplanten Telegramms, das in Telegramm-Fragmente unterteilt ist, auf dem Rückweg zu dem ersten Teilnehmer dargestellt ist.

Anhand der folgenden Figuren wird ein Ausführungsbeispiel eines Verfahrens zur Datenübertragung in einem Automatisierungskommunikationsnetzwerk, das beispielsweise im Rahmen der Fertigungs-, Gebäude- und Prozessautomatisierung eingesetzt werden kann, beschrieben. Dabei ist die Verwendungsangabe nicht einschränkend zu verstehen, da sich die Erfindung auch in anderen Bereichen des Automatisierungskommunikationsnetzwerks, bei denen ein erster Teilnehmer in einem ersten Netzwerksegment, ein zweiter Teilnehmer in einem zweiten Netzwerksegment und wenigstens ein Verteilerknoten zwischen den beiden Teilnehmern angeordnet ist, anwenden lässt.

Es wird darauf hingewiesen, dass die Figuren lediglich schematischer Natur und nicht maßstabsgetreu sind. In diesem Sinne können in den Figuren gezeigte Komponenten und Elemente zum besseren Verständnis übertrieben groß oder verkleinert dargestellt sein. Ferner wird darauf hingewiesen, dass die Bezugszeichen in den Figuren unverändert gewählt worden sind, wenn es sich um gleich ausgebildete Elemente und/oder Komponenten und/oder Größen handelt.

Automatisierungskommunikationsnetzwerke sind üblicherweise als Feldbussysteme verwirklicht, bei denen die Teilnehmer über den Feldbus miteinander vernetzt sind. Die Teilnehmer können mit Steuerungseinheiten Daten austauschen, wobei dazu in der Regel echtzeitfähige Netzwerkprotokolle eingesetzt werden. Häufig wird der Datenaustausch zwischen den Teilnehmern auf dem Feldbus in Form eines Master-Slave-Verwaltungsprinzips gesteuert. Die aktiven Busteilnehmer, die auch als Master-Teilnehmer bezeichnet werden, entsprechen den Steuereinheiten, die die Übertragung von Daten auf dem Feldbus bestimmen und koordinieren. Die passiven Busteilnehmer, die Slave-Teilnehmer genannt werden und keine eigene Buszugriffsberechtigung besitzen, bilden dagegen die Geräte der Maschinenperipherie. Damit kann ein passiver Busteilnehmer lediglich Nachrichten empfangen, diese quittieren und auf Anfrage des Master-Teilnehmers Daten bzw. Telegramme übermitteln. Die Geräte der Maschinenperipherie können beispielsweise Ein- und/oder Ausgabekomponenten entsprechen, die die Sensoren oder Aktoren einer Maschine oder einer Anlage mit dem Feldbus miteinander verbinden. Alternativ dazu können die Ein- und/oder Ausgabekomponenten direkt in die Sensoren oder Aktoren der Maschine oder der Anlage integriert sein.

Ein zyklischer Steuerprozess in der Automatisierungstechnik kann vom Master-Teilnehmer angestoßen werden und mithilfe eines Datenaustauschs zwischen dem Master-Teilnehmer und dem Slave-Teilnehmer über den Feldbus erfolgen. Dazu überträgt der Master-Teilnehmer die Ausgangsdaten in Form von geplanten Telegrammen auf dem Feldbus, wobei der Slave-Teilnehmer die ihm zugeordneten Ausgangsdaten aus dem geplanten Telegramm entnimmt, um die Ausgangsdaten zu Daten zu verarbeiten, die wiederum an den Master-Teilnehmer zurück übertragen werden und für den Master-Teilnehmer als Eingangsdaten für den nächsten zyklischen Steuerprozess dienen. Solche geplante Telegramme werden auch als "zyklische Telegramme" bzw. als "Echtzeit-Telegramme" bezeichnet.

Neben den Echtzeit-Telegrammen, die bei der Durchführung von Steuerungsaufgaben relevant sind, werden auf dem Feldbus auch ungeplante, sogenannte "azyklische Telegramme" übertragen. Ungeplante Telegramme sind Telegramme, die sich nicht zyklisch auf dem Feldbus wiederholen und demnach nicht echtzeitrelevant sind. Beispielsweise können diese Telegramme Parametrisierungs- und Konfigurationsdaten aufweisen oder Diagnosemeldungen. Azyklische Telegramme werden aus dem Grund auch als "Nicht-Echtzeit-Telegramme" bezeichnet.

Feldbussysteme, deren Verwaltungsstruktur auf dem Master-Slave-Prinzip beruht, können mit verschiedenen Netzwerkprotokollen betrieben werden. Das Ethernet-Protokoll stellt beispielsweise den am weitesten verbreiten Standard der Netzwerkprotokolle für ein lokales Netzwerk (LAN) dar. Ethernet-Telegramme können einen Nutzdatenblock mit einer Länge von 1500 Bytes umfassen und Telegramm-Übertragungsraten zwischen den einzelnen Netzwerkkomponenten innerhalb des LANs von einigen Gigabytes/Sekunde ermöglichen. In Form des sogenannten "Industrial Ethernet" findet das Ethernet-Protokoll auch in industriellen Fertigungsanlagen oder Maschinen eines Automatisierungssystems Anwendung, wobei das Ethernet-Protokoll hierbei die Echtzeitanforderungen des Automatisierungssystems gewährleisten soll. Das EtherCAT-Protokoll stellt zum Beispiel ein solches Protokoll dar, das auf der Ethernet-Protokoll-Technologie basiert und in echtzeitfähigen Automatisierungssystemen eingesetzt werden kann.

Die Besonderheit am EtherCAT-Protokoll liegt darin, dass die Verarbeitung der Nutzdaten im Nutzdatenblock des EtherCAT-Telegramms, das die oben genannten geplanten bzw. ungeplanten Telegramme umfassen kann, von dem Slave-Teilnehmer bereits während des Telegramm-Durchlaufs erfolgt. Auf diese Weise kann mithilfe des EtherCAT-Protokolls eine schnelle Verarbeitung der Daten im Automatisierungskommunikationssystem bereitgestellt werden, was zum Beispiel vorteilhaft für Echtzeitsysteme Anwendung finden kann.

Das EtherCAT-Telegramm umfasst Datagramme, welche jeweils ein Steuerdatenfeld und ein Nutzdatenfeld aufweisen. Das Steuerdatenfeld umfasst ein Befehlsfeld, welches dem Slave-Teilnehmer Auskunft darüber gibt, auf welche Art er die Nutzdaten des geplanten bzw. ungeplanten Telegramms verarbeiten soll: Also beispielsweise, ob der Slave-Teilnehmer Daten in einem Schreibvorgang in das Nutzdatenfeld des geplanten bzw. ungeplanten Telegramms einfügen soll, oder ob er zunächst Daten aus dem Nutzdatenfeld entnehmen und anschließend welche in das Nutzdatenfeld in einem Schreib-/Lesevorgang einfügen soll, bzw. ob der Slave-Teilnehmer lediglich Daten aus dem Nutzdatenfeld in einem Lesevorgang entnehmen soll. Weiterhin weist das Steuerdatenfeld ein Adressfeld auf. Im Adressfeld ist der Datenbereich im Slave-Teilnehmer festgelegt, mit dem der Slave-Teilnehmer beim Durchlauf des Nutzdatenfelds Daten austauschen soll.

Nach dem Empfang des Steuerdatenfelds im Datagramm des EtherCAT-Telegramms beginnt der Slave-Teilnehmer mit der Auswertung des Befehlsfelds und des Adressfelds. Ist der Slave-Teilnehmer adressiert, so entnimmt er bei einem Lese- bzw. bei einem Schreib-/Lese-Datagramm die für ihn bestimmten Ausgangsdaten aus dem Nutzdatenfeld während das Datagramm im EtherCAT-Telegramm durch den Slave-Teilnehmer hindurchläuft. Handelt es sich um ein Schreib- bzw. ein Schreib-/Lese-Datagramm, so fügt der entsprechende Slave-Teilnehmer die Eingangsdaten im Durchlauf in das Nutzdatenfeld im Datagramm ein. Das Verarbeiten der Datagramme im Durchlauf von den Slave-Teilnehmern verzögert das EtherCAT-Telegramm nur geringfügig.

Die Erfindung wird nachfolgend anhand des EtherCAT-Telegrammverkehrs beschrieben. Für die Erfindung kann jedoch ebenso ein anderes Ethernet-Protokoll verwendet werden, das in Echtzeitsystemen angewendet werden kann. Überdies kann das erfindungsgemäße Verfahren mit einem Standard-Ethernet-Protokoll verwirklicht werden. Gleichermaßen ist es möglich, die Erfindung in einem nicht Ethernet-basierten Automatisierungskommunikationsnetzwerk einzusetzen, in dem ein erster Teilnehmer in einem ersten Netzwerksegment und ein zweiter Teilnehmer in einem zweiten Netzwerksegment sowie mindestens ein Verteilerknoten, der mehrere Ein-/Ausgabe-Schnittstellen aufweist, angeordnet sind. Die Erfindung ist ferner nicht auf ein Automatisierungsnetzwerk mit einer hierarchischen Master-Slave-Verwaltungsstruktur beschränkt.

In dem erfindungsgemäßen Automatisierungskommunikationsnetzwerk werden die einzelnen Netzwerksegmente mit Teilnehmern mithilfe von einem oder mehreren Verteilerknoten, die als sogenannte "Switches" verwirklicht sein können, miteinander verbunden. Die Verteilerknoten dienen zudem dazu, den Datenaustausch der Teilnehmer in den Netzwerksegmenten in Form der geplanten, zyklischen und ungeplanten, azyklischen Telegramme zu koordinieren und die geplanten und ungeplanten Telegramme rechtzeitig an ihr Ziel zu leiten. Die entsprechenden Verteilerknoten weisen mehrere Ein-/Ausgabe-Schnittstellen auf, welche jeweils zumindest mit einem Netzwerksegment in Verbindung stehen, wobei in einem ersten Netzwerksegment ein erster Teilnehmer und in einem zweiten Netzwerksegment ein zweiter Teilnehmer angeordnet ist. Der Verteilerknoten ist ausgelegt, die geplanten und ungeplanten Telegramme auf einer Ein-/Ausgabe-Schnittstelle zu empfangen und auf einer weiteren Ein-/Ausgabe-Schnittstelle zu senden.

Den geplanten und ungeplanten Telegrammen sind jeweils Steuerdaten für den jeweiligen Verteilerknoten zugeordnet. Diese weisen ein Datenfeld auf, das der jeweilige Verteilerknoten bearbeitet. Bevor der jeweilige Verteilerknoten ein ungeplantes Telegramm überträgt, ermittelt der Verteilerknoten eine Sende-Zeitdauer, die zur Übertragung des entsprechenden ungeplanten Telegramms erforderlich ist. Zusätzlich bestimmt der jeweilige Verteilerknoten ein bis zu einer Übertragung eines nächsten geplanten Telegramms verbleibendes Zeitfenster der Ein-/Ausgabe-Schnittstelle des Verteilerknotens, die als die Sende-Schnittstelle für das ungeplante Telegramm vorgesehen ist.

Anhand von gespeicherten Informationen über die geplanten Telegramme, also deren Sendezeitpunkte, die in der Regel vom ersten Teilnehmer, also dem Master-Teilnehmer, für die einzelnen Verteilerknoten festgelegt werden, wissen die Verteilerknoten wie lange eine entsprechende Datenübertragungsstrecke zum übergeordneten Verteilerknoten beispielsweise auf dem Rückweg noch frei ist. Das heißt, das verbleibende Zeitfenster der Sende-Schnittstelle des jeweiligen Verteilerknotens bis zur Übertragung des nächsten geplanten Telegramms ist bekannt, bzw. kann einfach ermittelt werden und hieraus entschieden werden, ob das ungeplante Telegramm mit der Sende-Zeitdauer innerhalb des oben genannten Zeitfensters der Sende-Schnittstelle des Verteilerknotens vollständig oder in Fragmente unterteilt übertragen werden kann.

Hat der entsprechende Verteilerknoten beide Zeitwerte ermittelt, so prüft er, ob das ungeplante Telegramm mit der jeweiligen Sende-Zeitdauer innerhalb des verbleibenden Zeitfensters bis zum Senden des nächsten geplanten Telegramms der Sende-Schnittstelle des Verteilerknotens übertragbar ist. Ist dies der Fall, so überträgt der Verteilerknoten das ungeplante Telegramm vollständig. Zusätzlich trägt der Verteilerknoten vor dem Übertragen des ungeplanten Telegramms im Datenfeld der Steuerdaten des ungeplanten Telegramms eine erste Telegramminformation ein, die anzeigt, dass er das ungeplante Telegramm vollständig überträgt. Ergibt die Prüfung des Verteilerknotens hingegen, dass das ungeplante Telegramm mit der Sende-Zeitdauer nicht innerhalb des bis zur Übertragung des nächsten geplanten Telegramms verbleibenden Zeitfensters der Sende-Schnittstelle übertragbar ist, so fragmentiert der jeweilige Verteilerknoten das ungeplante Telegramm.

Überdies trägt der jeweilige Verteilerknoten vor dem Übertragen des ungeplanten Telegramms im Datenfeld der Steuerdaten des ungeplanten Telegramms eine zweite Telegramminformation ein, wobei die zweite Telegramminformation anzeigt, dass das ungeplante Telegramm fragmentiert worden ist und sie umfasst eine zusätzliche Verteilerknoten-Identifikation, die zur Unterscheidung der einzelnen Verteilerknoten dient, falls in dem Automatisierungskommunikationsnetzwerk mehrere Verteilerknoten zur Verbindung der Netzwerksegmente angeordnet sind. Ferner kann die erste Telegramminformation im Datenfeld der Steuerdaten des ungeplanten Telegramms die Verteilerknoten-Identifikation des jeweiligen Verteilerknotens umfassen.

Das Fragmentieren der Telegramme ist in der Regel für den Rückweg der Telegrammübertragung erforderlich. Denn auf dem Hinweg legt der erste Teilnehmer, also der Master-Teilnehmer im ersten Netzwerksegment fest, wann die geplanten Telegramme über die Verteilerknoten an den zweiten Teilnehmer, also den Slave-Teilnehmer im zweiten Netzwerksegment übertragen werden. Aufgrund dieser Festlegung können Telegramm-Kollisionen vermieden werden. Anders ist dies jedoch, wenn die geplanten bzw. ungeplanten Telegramme von dem Slave-Teilnehmer an den Master-Teilnehmer auf dem Rückweg gesendet werden. Hier können Kollisionen vermieden werden, wenn der jeweilige Verteilerknoten prüft, ob das verbleibende Zeitfenster der Sende-Schnittstelle des Verteilerknotens bis zur Übertragung des nächsten geplanten Telegramms für das Senden des ungeplanten Telegramms mit der Sende-Zeitdauer ausreicht, um das ungeplante Telegramm vollständig bzw. gegebenenfalls in Fragmente unterteilt zu übertragen, falls die entsprechende Datenübertragungsstrecke gerade frei ist.

Mithilfe der erfindungsgemäßen Vorgehensweise kann der Telegrammverkehr im Automatisierungskommunikationsnetzwerk optimiert werden. Dabei liegt der Kern der Erfindung in der optimalen Nutzung des bis zur Übertragung des nächsten geplanten Telegramms verbleibenden Zeitfensters der Sende-Schnittstelle des Verteilerknotens für die Übertragung des ungeplanten Telegramms. Dies ist möglich, da die Verteilerknoten anhand der gespeicherten Sendezeitpunkte der geplanten Telegramme wissen, wie lange die jeweilige Datenübertragungsstrecke zum nächsten Verteilerknoten noch frei ist. Demnach kann das ungeplante Telegramm in diesem verbleibenden Zeitfenster übertragen werden, ohne den Telegrammverkehr der geplanten Telegramme zu beeinflussen. Damit eignet sich die vorliegende Erfindung vorteilhaft für die Übertragung der ungeplanten, azyklischen Telegramme, da auf diese Weise die vorhandene Kapazität zur Übertragung jener Telegramme bestmöglich ausgenutzt werden kann. Die Erfindung bietet folglich den Vorteil, dass sie die Totzeit bei der Telegrammübertragung durch die effiziente Nutzung des verbleibenden Zeitfensters der Sende-Schnittstelle des Verteilerknotens auf ein Minimum reduziert. Der entsprechende Verteilerknoten überträgt das fragmentierte, ungeplante Telegramm über seine Sende-Schnittstelle, zusammen mit der zweiten Telegramminformation, die er vor dem Übertragen des ungeplanten Telegramms in dem Datenfeld der Steuerdaten des Telegramms einträgt. Die zweite Telegramminformation informiert andere Verteilerknoten bzw. den ersten Teilnehmer im Automatisierungskommunikationsnetzwerk darüber, dass das fragmentierte, ungeplante Telegramm kein vollständiges ungeplantes Telegramm ist, sondern zur Vollständigkeit weitere Telegramm-Fragmente des ungeplanten Telegramms erforderlich sind. Auch die Information, dass bei der Fragmentierung des ungeplanten Telegramms noch weitere Telegramm-Fragmente übertragen werden, trägt der entsprechende Verteilerknoten in die zweite Telegramminformation ein.

Zudem erlaubt die zweite Telegramminformation im Datenfeld der Steuerdaten des ungeplanten Telegramms eine Unterscheidung des jeweiligen Verteilerknotens im Automatisierungskommunikationsnetzwerk mithilfe der Verteilerknoten-Identifikation. Die Verteilerknoten-Identifikation erlaubt darüber hinaus auch eine Zuordnung der einzelnen Telegramm-Fragmente zu einem zusammengehörigen ungeplanten Telegramm, da sich die jeweiligen Verteilerknoten-Identifikationen der Verteilerknoten für ein ungeplantes Telegramm, das mehrere Telegramm-Fragmente umfasst, nicht verändern. Die Verteilerknoten-Identifikation der einzelnen Verteilerknoten wird wertmäßig jedoch für ein neues ungeplantes Telegramm, das fragmentiert wird, erhöht. Gleichermaßen wird die Verteilerknoten-Identifikation für ein neues ungeplantes Telegramm, das nicht fragmentiert wird, erhöht. Lediglich bei einem geplanten Telegramm wird die Verteilerknoten-Identifikation nicht inkrementiert.

Fig. 1 zeigt einen schematischen Aufbau eines Automatisierungskommunikationsnetzwerks mit mehreren Verteilerknoten und Netzwerksegmenten. Das Automatisierungskommunikationsnetzwerk umfasst vier Verteilerknoten CU1, CU2, CU3, CU4, die über einen Feldbus miteinander verbunden sein und einen Speicher aufweisen können. Die Topologie des Automatisierungskommunikationsnetzwerks sieht vor, dass ein erstes Netzwerksegment N1 mit einem ersten Teilnehmer T1 über eine erste Datenübertragungsstrecke D1 an eine erste Ein-/Ausgabe-Schnittstelle des ersten Verteilerknotens CU1 angeschlossen sein kann. Bei dem ersten Teilnehmer kann es sich um einen Master-Teilnehmer handeln, für die Erfindung ist dies jedoch nicht zwingend erforderlich.

Über eine zweite Ein-/Ausgabe-Schnittstelle sowie einer zweiten Datenübertragungsstrecke D2 ist der erste Verteilerknoten CU1 mit einem vierten Netzwerksegment N4, umfassend einen vierten Teilnehmer T4, verbunden. Neben dem gezeigten vierten Teilnehmer T4 im vierten Netzwerksegment N4, kann das vierte Netzwerksegment N4 weitere Teilnehmer aufweisen, die nicht dargestellt sind. Bei dem vierten Teilnehmer T4 kann es sich beispielsweise um einen Slave-Teilnehmer handeln, falls die Verwaltungshierarchie des Automatisierungskommunikationsnetzwerks auf dem Master-Slave-Prinzip beruhen soll.

Eine dritte Ein-/Ausgabe-Schnittstelle des ersten Verteilerknotens CU1 und eine dritte Datenübertragungsstrecke D3 dienen zur Anbindung des ersten Verteilerknotens CU1 an eine erste Ein-/Ausgabe-Schnittstelle eines zweiten Verteilerknotens CU2. Der zweite Verteilerknoten CU2 umfasst eine zweite Ein-/Ausgabe-Schnittstelle, die mit einer vierten Datenübertragungsstrecke D4 und einer ersten Ein-/Ausgabe-Schnittstelle mit einem dritten Verteilerknoten CU3 verbunden ist. Weiterhin weist der zweite Verteilerknoten CU2 eine dritte Ein-/Ausgabe-Schnittstelle auf, die über eine fünfte Übertragungsstrecke D5 an eine erste Ein-/Ausgabe-Schnittstelle eines vierten Verteilerknotens CU4 angebunden ist.

Der dritte Verteilerknoten CU3 umfasst eine zweite Ein-/Ausgabe-Schnittstelle, die mithilfe einer siebten Datenübertragungsstrecke D7 an ein drittes Netzwerksegment N3, aufweisend einen dritten Teilnehmer T3, verbunden ist. Statt dem gezeigten dritten Teilnehmer T3 können in dem dritten Netzwerksegment N3 auch mehrere Teilnehmer angeordnet sein. Bei dem dritten Teilnehmer T3 oder bei den nicht dargestellten, jedoch möglichen mehreren Teilnehmern kann es sich wie oben beschrieben um einen oder mehrere Slave-Teilnehmer handeln.

Zudem umfasst der dritte Verteilerknoten CU3 eine dritte Ein-/Ausgabe-Schnittstelle, die über eine sechste Datenübertragungsstrecke D6 mit einem zweiten Netzwerksegment N2 und einem darin angeordneten zweiten Teilnehmer T2 verbunden ist. Bei dem zweiten Teilnehmer T2 kann es sich zum Beispiel um einen Slave-Teilnehmer handeln. Auch kann das zweite Netzwerksegment N2 weitere, nicht dargestellte Teilnehmer umfassen.

Mithilfe einer zweiten Ein-Ausgabe-Schnittstelle des vierten Verteilerknotens CU4 kann der vierte Verteilerknoten CU4 mithilfe einer achten Datenübertragungsstrecke D8 an ein sechstes Netzwerksegment N6, umfassend einen sechsten Teilnehmer T6, angebunden sein. Das sechste Netzwerksegment N6 kann weitere, nicht dargestellte Teilnehmer umfassen. Bei dem dargestellten sechsten Teilnehmer T6 kann es sich beispielsweise um einen Slave-Teilnehmer handeln.

Eine dritte Ein-Ausgabe-Schnittstelle des vierten Verteilerknotens CU4 kann zur Verbindung des vierten Verteilerknotens CU4 mithilfe einer neunten Datenübertragungsstrecke D9 mit einem fünften Netzwerksegment N5 und einem fünften Teilnehmer T5 dienen. Das fünfte Netzwerksegment N5 kann ebenfalls mehrere Teilnehmer aufweisen, als in Fig. 1 dargestellt sind. Bei dem fünften Teilnehmer T5 kann es sich beispielsweise um einen Slave-Teilnehmer handeln.

Alternativ kann sich der erste bis sechste Teilnehmer T1-T6 oder einer der ersten bis sechsten Teilnehmer T1-T6 auch um einen in anderer Weise ausgebildeten Teilnehmer handeln. Denkbar ist beispielsweise ein Standard-Ethernet-Teilnehmer. Die Datenübertragung in dem in Fig. 1 dargestellten Automatisierungskommunikationsnetzwerk kann auf der Grundlage eines einheitlichen Netzwerkprotokolls, zum Beispiel des EtherCAT-Protokolls erfolgen. Zudem können, bei unterschiedlicher Ausbildung der einzelnen Teilnehmer in den Netzwerksegmenten, verschiedene Netzwerkprotokolle im Automatisierungskommunikationsnetzwerk eingesetzt werden. Der Master-Teilnehmer ist dann so ausgelegt, dass er die verschiedenen, im Automatisierungskommunikationsnetzwerk eingesetzten Netzwerkprotokolle verarbeiten kann.

Die in Fig. 1 gewählte Darstellung von Doppelpfeilen zwischen dem ersten bis sechsten Teilnehmer T1-T6 im ersten bis sechsten Netzwerksegment N1-N6 und dem ersten bis vierten Verteilerknoten CU1-CU4 zeigt an, dass eine bidirektionale Datenübertragung zwischen dem ersten bis sechsten Teilnehmer T1-T6 und dem ersten bis vierten Verteilerknoten CU1-CU4 auf einem Hinweg und einem Rückweg möglich ist. Die erste bis neunte Datenübertragungsstrecke D1-D9 zwischen den Verteilerknoten CU1-CU4 und Teilnehmern T1-T6 weist ebenfalls einen Hin- und Rückweg auf. Folglich können Daten in Form der geplanten und ungeplanten Telegramme zwischen den einzelnen Teilnehmern T1-T6 auf einem geschlossenen Datenübertragungsweg im Automatisierungskommunikationsnetzwerk übertragen werden. Weiterhin ist die Darstellung von vier Verteilerknoten CU1, CU2, CU3, CU4 nicht als zwingend erforderlich anzusehen, da gleichermaßen mehr oder weniger Verteilerknoten innerhalb des Netzwerks angeordnet sein können. Auch kann die Anzahl der einzelnen Ein-/Ausgabe-Schnittstellen der Verteilerknoten von der beschriebenen Anzahl der Ein-/Ausgabe-Schnittstellen abweichen. Ferner ist denkbar das Automatisierungskommunikationsnetzwerk mit einer größeren oder kleineren Anzahl an Netzwerksegmenten und/oder Teilnehmern zu verwirklichen.

Nachfolgend wird ein Austausch von Daten in Form der ungeplanten Telegramme zwischen dem ersten Teilnehmer T1 im ersten Netzwerksegment N1 und dem zweiten Teilnehmer T2 im zweiten Netzwerk N2 beschrieben. Dabei kann es sich bei dem ersten Teilnehmer T1 um einen Master-Teilnehmer handeln und bei dem zweiten Teilnehmer T2 um einen Slave-Teilnehmer. Der erste Teilnehmer T1 stellt jedem ungeplanten EtherCAT-Telegramm, bei dem der zweite Teilnehmer T2 oder weitere nicht dargestellte Teilnehmer im zweiten Netzwerksegment N2, einen Schreibvorgang ausführen sollen, bei dem Daten in ein Nutzdatenfeld des ungeplanten EtherCAT-Telegramms geschrieben werden sollen, einen Daten-Kopfsatz voran. Dieser Daten-Kopfsatz enthält Informationen für die zwischen dem ersten und dem zweiten Teilnehmer T1, T2 im Automatisierungskommunikationsnetzwerk angeordneten Verteilerknoten CU1, CU2, CU3 in Bezug auf die Weiterleitung der ungeplanten Telegramme.

In der in Fig. 1 gezeigten Beispielkonfiguration des Automatisierungskommunikationsnetzwerks sind drei Verteilerknoten CU1, CU2, CU3 zwischen dem ersten Teilnehmer T1 des ersten Netzwerksegments N1 und dem zweiten Teilnehmer T2 des zweiten Netzwerksegments N2 angeordnet. Demnach umfasst der dem ungeplanten EtherCAT-Telegramm vorangestellte Daten-Kopfsatz der vom ersten Teilnehmer T1 erstellt wird, für jeden Verteilerknoten CU1, CU2, CU3 einen separaten Datenabschnitt, der im Folgenden Datenfeld genannt wird. Der Daten-Kopfsatz des ungeplanten EtherCAT-Telegramms weist neben den einzelnen Datenfeldern der Verteilerknoten CU1, CU2, CU3 einen Steuerabschnitt auf. Der Steuerabschnitt umfasst eine Kennungsinformation, anhand derer ein Verteilerknoten CU1, CU2, CU3 erkennt, dass es sich bei dem ungeplanten Telegramm um ein erweitertes, ungeplantes EtherCAT-Telegramm handelt und dass ihm ferner ein Datenfeld zugeordnet ist. Weiterhin weist der Steuerabschnitt einen Zähler auf, der ausgehend vom ersten Teilnehmer T1 die Anzahl der vom ungeplanten Telegramm zu durchlaufenden Verteilerknoten CU1, CU2, CU3 bis zum zweiten Teilnehmer T2 im zweiten Netzwerksegment N2, angibt. Im gezeigten Beispiel zeigt der Zähler drei Verteilerknoten CU1, CU2, CU3 an. Ferner weist der Steuerabschnitt des Daten-Kopfsatzes eine Längenangabe des ungeplanten Telegramms auf, die die gesamte Telegrammlänge, inklusive dem Daten-Kopfsatz umfasst.

Die Fig. 2A und 2B stellen schematisch das erfindungsgemäße erweiterte, ungeplante EtherCAT-Telegramm, das neben dem eigentlichen EtherCAT-Telegramm noch den Daten-Kopfsatz umfasst, zum Datenaustausch zwischen dem in Fig. 1 gezeigten ersten Teilnehmer T1 und dem zweiten Teilnehmer T2 im zweiten Netzwerksegment N2 dar. Fig. 2A zeigt den schematischen Aufbau des ungeplanten Telegramms auf dem Hinweg zu dem zweiten Teilnehmer T2 und Fig. 2B veranschaulicht den schematischen Telegrammaufbau auf dem Rückweg, ausgehend von dem zweiten Teilnehmer T2 zu dem ersten Teilnehmer T1, bei dem das ungeplante Telegramm in Fragmente unterteilt ist. In Fig. 2A ist die Ausgabe des ungeplanten Telegramms durch den ersten Teilnehmer T1 sowie nach dem Durchlaufen des ungeplanten Telegramms durch die einzelnen Verteilerknoten CU1, CU2, CU3 auf dem Hinweg des ungeplanten Telegramms und in Fig. 2B ist der Telegrammaufbau nach der Verarbeitung durch den zweiten Teilnehmer T2 und nach dem Durchlaufen durch die Verteilerknoten CU1, CU2, CU3 auf dem Rückweg gezeigt.

In einem ersten Telegrammaufbau TEL1 in Fig. 2A ist das vom ersten Teilnehmer im ersten Netzwerksegment über die erste Datenübertragungsstrecke an die erste Ein-/Ausgabe-Schnittstelle des ersten Verteilerknotens ausgesandte ungeplante Telegramm zu sehen. Das ungeplante Telegramm weist einen dem EtherCAT-Telegramm ECAT vorangestellten ersten Daten-Kopfsatz HEAD1 auf. Der erste Daten-Kopfsatz HEAD1 umfasst einen Steuerabschnitt TEL. Der Steuerabschnitt TEL weist eine Kennungsinformation auf, die anzeigt, dass es sich um ein erweitertes, ungeplantes EtherCAT-Telegramm handelt. Anhand der Kennungsinformation kann ein Verteilerknoten erkennen, dass ihm ein Datenfeld D-CU1, D-CU2, D-CU3 zugeordnet ist. Weiterhin weist der Steuerabschnitt TEL einen Zähler auf. Der Zähler gibt die Anzahl der vom ungeplanten Telegramm zu durchlaufenden Verteilerknoten an. Darüber hinaus umfasst der Steuerabschnitt TEL eine Längenangabe des ungeplanten Telegramms, die die gesamte Länge des ungeplanten Telegramms, inklusive dem ersten Daten-Kopfsatz HEAD1 angibt.

An den Steuerabschnitt TEL schließen sich im ersten Daten-Kopfsatz HEAD1 drei Datenfelder D-CU1, D-CU2, D-CU3 an, wobei das erste Datenfeld D-CU1 dem ersten Verteilerknoten, das zweite Datenfeld D-CU2 dem zweiten Verteilerknoten und das dritte Datenfeld D-CU3 dem dritten Verteilerknoten zugeordnet ist. Die einzelnen Datenfelder D-CU1, D-CU2, D-CU3 im ersten Daten-Kopfsatz HEAD1 des ungeplanten Telegramms sind demnach in der gleichen Reihenfolge angeordnet, in der das ungeplante Telegramm die einzelnen Verteilerknoten passiert.

Der erste Verteilerknoten empfängt das ungeplante Telegramm wie oben beschrieben und beginnt mit der Verarbeitung des ungeplanten Telegramms. Der Verteilerknoten wertet zunächst, beginnend mit der Kennungsinformation des Steuerabschnitts TEL, den ersten Daten-Kopfsatz HEAD1 aus, und erkennt anhand der Kennungsinformation, dass das ungeplante Telegramm einen dem EtherCAT-Telegramm vorangestellten ersten Daten-Kopfsatz HEAD1 aufweist, es sich bei dem ungeplanten Telegramm also um ein erweitertes EtherCAT-Telegramm handelt. Mithilfe des Zählers in dem Steuerabschnitt TEL des ungeplanten Telegramms erkennt der erste Verteilerknoten, dass für die Übertragung des ungeplanten Telegramms noch zwei weitere Verteilerknoten folgen. Beispielsweise zeigt der Zähler für die Anzahl der vom ungeplanten Telegramm auf dem Hinweg zum zweiten Teilnehmer T2 zu durchlaufenden Verteilerknoten den Wert drei an. Bei einer alternativen Gestaltung des Automatisierungskommunikationsnetzwerks in Fig. 1 oder einem anderen Ziel-Teilnehmer in einem weiteren Netzwerksegment kann der Zähler auch einen dazu abweichenden Wert für die Anzahl der zu durchlaufenden Verteilerknoten anzeigen.

Der erste Verteilerknoten reduziert (dekrementiert) den Zähler mit der Anzahl der zu durchlaufenden Verteilerknoten, zum Beispiel auf den Wert zwei, und entnimmt das dem ersten Verteilerknoten zugeordnete erste Datenfeld D-CU1, das auf den Steuerabschnitt TEL folgt, aus dem ersten Daten-Kopfsatz HEAD1 des ungeplanten Telegramms. Danach speichert der erste Verteilerknoten das ihm zugeordnete erste Datenfeld D-CU1 in seinem Speicher ab und leitet das um das erste Datenfeld D-CU1 verkürzte, ungeplante Telegramm über die dritte Ein-/Ausgabe-Schnittstelle des ersten Verteilerknotens weiter. Das verkürzte, ungeplante Telegramm mit dem zweiten Telegrammaufbau TEL2 ist in Fig. 2A unterhalb des ersten Telegrammaufbaus TEL1 gezeigt.

Die Information über das erste Datenfeld D-CU1, die der erste Verteilerknoten in seinem Speicher ablegt, kann im Normalfall gelöscht werden, wenn das ungeplante Telegramm auf dem Rückweg von dem ersten Verteilerknoten verarbeitet worden ist. Bei Verlusten, die bei der Übertragung des ungeplanten Telegramms auftreten können, kann es passieren, dass der Speicher des ersten Verteilerknotens überläuft. Dann ist es möglich, nach dem sogenannten "FIFO-Prinzip" (FIFO bedeutet First In First Out) zu verfahren und die ältesten Informationen zu verwerfen. Diese Vorgehensweise ist auch bei Informationen von geplanten Telegrammen denkbar, also für den Fall, dass das geplante Telegramm auf dem Rückweg von dem Slave-Teilnehmer zu dem Master-Teilnehmer stark verspätet beim ersten Verteilerknoten eintrifft und der entsprechende Eintrag über die Information des ersten Datenfelds D-CU1 im Speicher des ersten Verteilerknotens bereits gelöscht ist. Dann würde das rückkehrende geplante Telegramm wie ein rückkehrendes ungeplantes Telegramm behandelt werden, was aufgrund der starken Verspätung des geplanten Telegramms jedoch unproblematisch ist. Alternativ dazu ist es denkbar, Zeitstempel aufzunehmen und nach Ablauf einer maximalen Haltedauer die veralteten Einträge im Speicher des ersten Verteilerknotens zu löschen.

Der zweite Verteilerknoten verarbeitet das verkürzte, ungeplante Telegramm mit dem Telegrammaufbau TEL2 in analoger Weise zur oben beschriebenen Verarbeitung des ungeplanten Telegramms mit dem ersten Telegrammaufbau TEL1. Der zweite Verteilerknoten wertet zunächst den des EtherCAT-Telegramms ECAT vorangestellten zweiten Daten-Kopfsatz HEAD2 aus und stellt mithilfe des Zählers im Steuerabschnitt TEL des zweiten Daten-Kopfsatzes HEAD2 fest, dass zur Übertragung des ungeplanten Telegramms ein weiterer Verteilerknoten erforderlich ist, der als nächstes folgt. Der zweite Verteilerknoten dekrementiert daraufhin den Zähler des Steuerabschnitts TEL im zweiten Daten-Kopfsatz HEAD2 des ungeplanten Telegramms, zum Beispiel auf den Wert eins, und nimmt das dem zweiten Verteilerknoten zugeordnete zweite Datenfeld D-CU2 aus dem zweiten Daten-Kopfsatz HEAD2 des ungeplanten Telegramms heraus. Das zweite Datenfeld D-CU2 ist zwischen dem Steuerabschnitt TEL und dem dritten Datenfeld D-CU3 im zweiten Daten-Kopfsatz HEAD2 des ungeplanten Telegramms angeordnet.

Der zweite Verteilerknoten legt das ihm zugeordnete zweite Datenfeld D-CU2 analog zur oben beschriebenen Vorgehensweise in seinem Speicher ab. Ebenso kann für die Dauer der Speicherung der Informationen analoges gelten wie bereits oben beschrieben wurde. Ferner sendet der zweite Verteilerknoten das nochmals verkürzte ungeplante Telegramm mit dem dritten Telegrammaufbau TEL3 in Fig. 2A über seine zweite Ein-/Ausgabe-Schnittstelle weiter. Das nochmals verkürzte ungeplante Telegramm wird über die vierte Datenübertragungsstrecke an den dritten Verteilerknoten übertragen, wobei der dritte Verteilerknoten das ungeplante Telegramm auf seiner ersten Ein-/Ausgabe-Schnittstelle empfängt.

Bei der Verarbeitung des nochmals verkürzten ungeplanten Telegramms mit dem dritten Telegrammaufbau TEL3 geht der dritte Verteilerknoten in analoger Weise zur Verarbeitung des verkürzten ungeplanten Telegramms und des anfänglichen ungeplanten Telegramms von den anderen beiden Verteilerknoten vor. Der dritte Verteilerknoten wertet zunächst den Steuerabschnitt TEL des dritten Daten-Kopfsatzes HEAD3 des nochmals verkürzten ungeplanten EtherCAT-Telegramms aus. Anhand des Zählers in dem Steuerabschnitt TEL erkennt der dritte Verteilerknoten, dass kein weiterer Verteilerknoten für die Übertragung des nochmals verkürzten ungeplanten Telegramms folgt. Aus diesem Grund entnimmt der dritte Verteilerknoten neben den ihm zugeordneten Datenfeld D-CU3, das nach dem Steuerabschnitt TEL im dritten Daten-Kopfsatz HEAD3 angeordnet ist, weiterhin noch den Steuerabschnitt TEL aus dem dritten Daten-Kopfsatz HEAD3 des Telegramms. Damit reduziert der dritte Verteilerknoten das nochmals verkürzte ungeplante Telegramm mit dem dritten Telegrammaufbau TEL3 auf das EtherCAT-Telegramm ECAT, ohne Daten-Kopfsatz, mit dem vierten Telegrammaufbau TEL4 in Fig. 2A.

Der dritte Verteilerknoten speichert das ihm zugeordnete dritte Datenfeld D-CU3 in seinem Speicher. Außerdem legt der dritte Verteilerknoten eine weitere Steuerinformation aus dem EtherCAT-Telegramm ECAT in seinem Speicher ab. Für die Dauer der Speicherung der genannten Informationen kann entsprechendes gelten, das oben beschrieben wurde. Diese Steuerinformation kann zur Identifikation des ungeplanten EtherCAT-Telegramms ECAT dienen. Es ist beispielsweise möglich, dass der dritte Verteilerknoten dazu die Kennungsinformation, die sogenannte "Destination-MAC-ID (DEST-MAC-ID)" nutzt, die das EtherCAT-Telegramm ECAT selbst umfasst. Die Destination-MAC-ID wird im Zusammenhang mit der Tabelle 1 im Folgenden noch genauer erläutert. Der dritte Verteilerknoten überträgt das ungeplante EtherCAT-Telegramm ECAT ferner über seine zweite Ein-/Ausgabe-Schnittstelle und den sechsten Datenübertragungsweg D6 an das zweite Netzwerksegment mit dem zweiten Teilnehmer T2.

Im zweiten Netzwerksegment N2 können neben dem zweiten Teilnehmer T2 weitere Teilnehmer angeordnet und ebenso wie der zweite Teilnehmer T2 selbst, als Slave-Teilnehmer ausgebildet sein. Die zweite Ein-/Ausgabe-Schnittstelle des dritten Verteilerknotens CU3 bildet zusammen mit der sechsten Datenübertragungsstrecke D6 und dem zweiten Netzwerksegment N2 mit seinem als Slave-Teilnehmer ausgebildeten zweiten Teilnehmer T2 einen geschlossenen Datenübertragungsweg mit einem Hinweg und einem Rückweg. Das ungeplante EtherCAT-Telegramm ECAT kann von dem Slave-Teilnehmer im Durchlauf verarbeitet werden. In der Regel erfolgt die Verarbeitung im Durchlauf auf dem Hinweg des ungeplanten EtherCAT-Telegramms ECAT, sie kann jedoch ebenso auf dem Rückweg des ungeplanten EtherCAT-Telegramms ECAT erfolgen.

Der Slave-Teilnehmer entnimmt jeweils die ihm vom ersten Teilnehmer T1, der als Master-Teilnehmer ausgebildet sein kann, zugeordneten Ausgangsdaten aus dem ungeplanten EtherCAT-Telegramm ECAT und kann je nach Verarbeitungsart (Lesevorgang, Schreibvorgang, Schreib-/Lesevorgang) auch Eingangsdaten für den Master-Teilnehmer einfügen. Nach erfolgter Verarbeitung des ungeplanten EtherCAT-Telegramms ECAT von den im zweiten Netzwerksegment N2 angeordnetem Slave-Teilnehmer erhält der dritte Verteilerknoten CU3 das ungeplante EtherCAT-Telegramm ECAT wieder auf seiner zweiten Ein-/Ausgabe-Schnittstelle gemäß dem vierten Telegrammaufbau TEL4 zurück.

Fig. 2B zeigt als Ausgangspunkt noch einmal das ungeplante EtherCAT-Telegramm ECAT mit dem vierten Telegrammaufbau TEL4. Das ungeplante EtherCAT-Telegramm ECAT wird auf dem Rückweg des ungeplanten Telegramms zum ersten Teilnehmer T1, der als Master-Teilnehmer ausgebildet sein kann, mit dem Daten-Kopfsatz ergänzt, den die einzelnen in umgekehrter Reihenfolge zu durchlaufenden drei Verteilerknoten CU3, CU2, CU1 nacheinander erweitern. Der dritte Verteilerknoten CU3 nutzt zur Identifikation des ungeplanten EtherCAT-Telegramms ECAT wie oben beschrieben die Kennungsinformation, die der dritte Verteilerknoten CU3 auf dem Hinweg abgespeichert hat und die das ungeplante EtherCAT-Telegramm ECAT selbst aufweist.

Da es auf dem Rückweg der Telegrammübertragung zu dem ersten Teilnehmer T1 vorkommen kann, dass mehrere Teilnehmer, die in dem gleichen oder in unterschiedlichen Netzwerksegmenten angeordnet sein können, gleichzeitig senden, prüft der jeweilige Verteilerknoten vor der Übertragung des ungeplanten Telegramms über die jeweilige Datenübertragungsstrecke zum nächsten Verteilerknoten, ob das verbleibende Zeitfenster der Ein-/Ausgabe-Schnittstelle des Verteilerknotens, die als die Sende-Schnittstelle vorgesehen ist (beispielsweise die erste Ein-/Ausgabe-Schnittstelle), bis zur Übertragung des nächsten geplanten Telegramms ausreicht, um das entsprechende ungeplante Telegramm zu übertragen. Dazu ermittelt der jeweilige Verteilerknoten, beispielsweise der dritte Verteilerknoten CU3, zunächst die Sende-Zeitdauer des zu übertragenden ungeplanten Telegramms. Wenn der dritte Verteilerknoten CU3 das vollständige, ungeplante EtherCAT-Telegramm ECAT mit dem vierten Telegrammaufbau TEL4 empfängt, ist die Länge des ungeplanten Telegramms bekannt, aus der die Sende-Zeitdauer des ungeplanten Telegramms folgt. Alternativ dazu kann der dritte Verteilerknoten CU3 die Länge des ungeplanten Telegramms auch aus der Kennungsinformation des Daten-Kopfsatzes des ungeplanten Telegramms und der gespeicherten Information über das dritte Datenfeld D-CU3 ermitteln. Beispielsweise kann der dritte Verteilerknoten CU3 das ungeplante Telegramm im Cut-Through-Verfahren weiterleiten, welches den Vorteil einer geringeren Durchlaufverzögerung bietet. Der vollständige Empfang des ungeplanten Telegramms von dem dritten Verteilerknoten CU3 ist zwingend erforderlich, wenn das Automatisierungskommunikationsnetzwerk nicht über die Master-Slave-Hierarchie verwirklicht ist und ein zum EtherCAT-Protokoll abweichendes Netzwerkprotokoll für die Telegrammübertragung verwendet wird.

Der dritte Verteilerknoten CU3 erstellt daraufhin den vierten Daten-Kopfsatz HEAD4 und stellt diesen dem ungeplanten EtherCAT-Telegramm ECAT voran. Der vierte Daten-Kopfsatz HEAD4 weist den Steuerabschnitt TEL auf, der die Kennungsinformation umfasst, die den einzelnen Verteilerknoten anzeigt, dass der Daten-Kopfsatz des ungeplanten Telegramms ein Datenfeld aufweist, das dem jeweiligen Verteilerknoten zugeordnet ist. Ferner zeigt die Kennungsinformation an, dass sich das ungeplante Telegramm um ein erweitertes EtherCAT-Telegramm ECAT handelt. Zusätzlich weist der Steuerabschnitt TEL einen Zähler auf, der die Anzahl der zu durchlaufenden Verteilerknoten bei der Übertragung des ungeplanten Telegramms zurück zu dem ersten Teilnehmer anzeigt, sowie die Längenangabe, die die gesamte Länge des Telegramms angibt.

Wenn das ungeplante Telegramm mit der Sende-Zeitdauer innerhalb des Zeitfensters der Sende-Schnittstelle (der ersten Ein-/Ausgabe-Schnittstelle) des Verteilerknotens bis zur Übertragung des nächsten geplanten Telegramms übertragbar ist, so trägt beispielsweise der dritte Verteilerknoten CU3 in dem ihm zugeordneten Datenfeld D-CU3* des vierten Daten-Kopfsatzes HEAD4 eine erste Telegramminformation ein, die anzeigt, dass der dritte Verteilerknoten CU3 das ungeplante EtherCAT-Telegramm ECAT vollständig überträgt.

Kann das ungeplante Telegramm mit der Sende-Zeitdauer hingegen nicht innerhalb der sendefreien Zeitdauer der Sende-Schnittstelle (der ersten Ein-/Ausgabe-Schnittstelle) des Verteilerknotens übertragen werden, so generiert beispielsweise der dritte Verteilerknoten CU3 eine zweite Telegramminformation in dem ihm zugeordneten Datenfeld D-CU3*. Die zweite Telegramminformation zeigt an, dass der dritte Verteilerknoten CU3 das ungeplante Telegramm fragmentiert. Zudem umfasst die zweite Telegramminformation die Verteilerknoten-Identifikation, die zur Unterscheidung der einzelnen Verteilerknoten dient. Der dritte Verteilerknoten CU3 fragmentiert das EtherCAT-Telegramm ECAT, wobei das Telegramm-Fragment ECAT1 wenigstens eine minimale Fragment-Länge aufweisen soll. Der schematische Aufbau des ungeplanten ersten EtherCAT-Telegramm-Fragments ECAT1, das der dritte Verteilerknoten CU3 über seine erste Ein-/Ausgabe-Schnittstelle an die zweite Ein-/Ausgabe-Schnittstelle des zweiten Verteilerknotens CU2 sendet, kann beispielsweise dem erweiterten, fünften Telegrammaufbau TEL5 in Fig. 2B entsprechen.

In der nachfolgenden Tabelle 1 ist ein möglicher Aufbau des vierten Daten-Kopfsatzes HEAD4 im Sinne des erweiterten, fünften Telegrammaufbaus TEL5 gezeigt.

**Tabelle 1**

| Byte-Nummer | Daten-Kopfsatz Abschnitt | Bezeichnung |
|---|---|---|
| 0-5 | TEL | DEST-MAC-ID |
| 6-7 | TEL | TEL-LEN |
| 8 | D-CU3* | CMD (Wert 4) |
| 9 | D-CU3* | FRAME-ID (Wert X3) |
| 10-11 | D-CU3* | OFFSET (Wert 0) |
| 12 | D-CU3* | NEXT (Wert 1) |
| 13-15 | D-CU3* | RESERVE |

Die Bytes 0 bis 7 des Daten-Kopfsatzes HEAD4 sind für den Steuerabschnitt TEL des Telegramms reserviert. Davon umfassen die Bytes 0 bis 5 die Kennungsinformation DEST-MAC-ID, welche dem zweiten Verteilerknoten CU2 anzeigt, dass es sich um ein erweitertes ungeplantes Telegramm handelt. Zusätzlich kann der zweite Verteilerknoten CU2 über die Kennungsinformation feststellen, dass der Daten-Kopfsatz HEAD4 des ungeplanten Telegramms ein Datenfeld D-CU3* aufweist, das dem dritten Verteilerknoten CU3 zugeordnet ist.

Ein Byte der Kennungsinformation DEST-MAC-ID wird überdies als Zähler verwendet. Der Zähler zeigt an, wie viele Verteilerknoten durchlaufen werden, ausgehend von dem zweiten Teilnehmer T2 zu dem ersten Teilnehmer T1, wobei der Zähler zunächst den Wert eins aufweist. Ferner umfassen die Bytes 6 und 7 des Steuerabschnitts TEL eine Längenangabe TEL-LEN des ungeplanten Telegramms, wobei die Längenangabe die gesamte Länge des ungeplanten Telegramms (inkl. dem Daten-Kopfsatz) wiedergibt.

Das Byte 8 des Datenfelds D-CU3* umfasst die zweite Telegramminformation, wobei die zweite Telegramminformation anzeigt, dass der dritte Verteilerknoten CU3 das ungeplante EtherCAT-Telegramm ECAT1 fragmentiert hat. Die Fragmentierung des ungeplanten Telegramms wird mithilfe des Werts CMD=4 gekennzeichnet. Das Byte 9 des Datenfelds D-CU3* weist die Verteilerknoten-Identifikation FRAME-ID der zweiten Telegramminformation auf, wobei die Verteilerknoten-Identifikation FRAME-ID des dritten Verteilerknotens CU3 den Wert X3 aufweist. Mithilfe der Verteilerknoten-Identifikation wird der jeweilige Verteilerknoten gekennzeichnet. Zudem erlaubt die Verteilerknoten-Identifikation eine Zuordnung der ungeplanten Telegramm-Fragmente zu einem EtherCAT-Telegramm ECAT, da sie für ein weiteres ungeplantes Telegramm wertmäßig erhöht wird.

Die Bytes 10 bis 11 des Datenfelds D-CU3* der zweiten Telegramminformation umfassen den Telegramm-Offset OFFSET, wobei das erste EtherCAT-Telegramm-Fragment ECAT1 den Offset Wert=0 erhält. Der Telegramm-Offset OFFSET gibt die Position des ersten im ersten EtherCAT-Telegrammfragment ECAT1 enthaltenen Nutzdatenblocks an. Wobei der Nutzdatenblock dem oben beschriebenen Nutzdatenfeld entsprechen kann.

Das Byte 12 des Datenfelds D-CU3* der zweiten Telegramminformation NEXT zeigt an, dass aufgrund der Fragmentierung des ungeplanten EtherCAT-Telegramms ECAT1 noch weitere Telegramm-Fragmente zu übertragen sind. Dies ist durch den Wert NEXT=1 gekennzeichnet.

Die Bytes 13-15 des Datenfelds D-CU3* RESERVE entsprechen Reserve Bytes, die nicht belegt sein können.

Alternativ dazu kann der dritte Verteilerknoten CU3 das ungeplante EtherCAT-Telegramm unfragmentiert an den zweiten Verteilerknoten CU2 übertragen und in dem ihm zugeordneten Datenfeld D-CU3* in einer ersten Telegramminformation anzeigen, dass das ungeplante Telegramm unfragmentiert übertragen wird, ebenso wie seine Verteilerknoten-Identifikation X3, die in der ersten Telegramminformation ferner enthalten sein kann. Der Aufbau des beschriebenen unfragmentierten Telegramms ist in Fig. 2B nicht gesondert dargestellt.

Der zweite Verteilerknoten CU2 empfängt das erweiterte ungeplante erste EtherCAT-Telegrammfragment mit dem fünften Telegrammaufbau TEL5 auf seiner zweiten Ein-/Ausgabe-Schnittstelle und stellt fest, dass das ungeplante Telegramm einen dem eigentlichen ersten EtherCAT-Telegrammfragment ECAT1 vorangestellten Daten-Kopfsatz HEAD4 aufweist, der gemäß Tabelle 1 aufgebaut sein kann. Anhand der gespeicherten Informationen der geplanten Telegramme, umfassend deren Sendezeitpunkte, kann der zweite Verteilerknoten CU2 in Verbindung mit den Telegrammlängen der geplanten Telegramme feststellen, ob er das ungeplante Telegramm sofort weiterschicken kann oder ob der zweite Verteilerknoten CU2 das ungeplante Telegramm zwischenspeichern muss. Denn aus den oben genannten Sendezeitpunkten und den Telegrammlängen der geplanten Telegramme kann der Verteilerknoten das Zeitfenster bestimmen, das er zur Übertragung eines ungeplanten Telegramms nutzen kann.

Der zweite Verteilerknoten CU2 beginnt mit der Auswertung des Daten-Kopfsatzes HEAD4, beispielsweise der Kennungsinformation DEST-MAC-ID im Steuerabschnitt TEL. Der zweite Verteilerknoten CU2 inkrementiert den Zähler um eins, sodass er den Wert zwei anzeigt und fügt ferner zwischen dem Steuerabschnitt TEL im Daten-Kopfsatz HEAD5 des ungeplanten Telegrammfragments ECAT1 und dem Datenfeld D-CU3* des dritten Verteilerknotens CU3 das dem zweiten Verteilerknoten CU2 zugeordnete Datenfeld D-CU2* in den Daten-Kopfsatz HEAD5 des ungeplanten Telegrammfragments ECAT1 ein. Beispielsweise kann das verbleibende Zeitfenster der zum Senden vorgesehenen Sende-Schnittstelle (die erste Ein-/Ausgabe-Schnittstelle) des zweiten Verteilerknotens für die Übertragung des ungeplanten ersten Telegrammfragments ECAT1 mit dem sechsten Telegrammaufbau TEL6 und der Sende-Zeitdauer im gezeigten Beispiel ausreichen, sodass der zweite Verteilerknoten CU2 das ungeplante erste EtherCAT-Telegramm-Fragment ECAT1 nicht erneut fragmentieren muss. Dann kennzeichnet der zweite Verteilerknoten CU2, dass er das ungeplante erste EtherCAT-Telegrammfragment ECAT1 vollständig überträgt, mithilfe einer ersten Telegramminformation in dem Datenfeld D-CU2* des Daten-Kopfsatz HEAD5 des zweiten Verteilerknotens. Weiterhin kann die erste Telegramminformation in dem Datenfeld D-CU2* des Steuerabschnitts TEL des ungeplanten ersten EtherCAT-Telegrammfragments ECAT1 eine zusätzliche Verteilerknoten-Identifikation FRAME-ID umfassen, um eine Zuordnung zu dem zweiten Verteilerknoten CU2 zu ermöglichen. Beispielsweise kann die Verteilerknoten-Identifikation FRAME-ID des zweiten Verteilerknotens CU2 den Wert X2 aufweisen.

Der Daten-Kopfsatz HEAD5 des ungeplanten ersten EtherCAT-Telegrammfragments ECAT1 mit dem sechsten Telegrammaufbau TEL6, das der zweite Verteilerknoten CU2 an den ersten Verteilerknoten CU1 sendet, kann beispielsweise wie in Tabelle 2 aufgebaut sein.

**Tabelle 2**

| Byte-Nummer | Daten-Kopfsatz Abschnitt | Bezeichnung |
|---|---|---|
| 0-5 | TEL | DEST-MAC-ID |
| 6-7 | TEL | TEL-LEN |
| 8 | D-CU2* | CMD (Wert 3) |
| 9 | D-CU2* | FRAME-ID (Wert X2) |
| 10-15 | D-CU2* | RESERVE |
| 16 | D-CU3* | CMD (Wert 4) |
| 17 | D-CU3* | FRAME-ID (Wert X3) |
| 18-19 | D-CU3* | OFFSET |
| 20 | D-CU3* | NEXT (Wert 1) |
| 21-23 | D-CU3* | RESERVE |

Analog zu Tabelle 1, die den Aufbau des Daten-Kopfsatzes HEAD4 beschreibt, sind die Bytes 0 bis 7 für den Steuerabschnitt TEL des ungeplanten ersten Telegrammfragments ECAT1 reserviert. Die Bytes 0 bis 5 umfassen die Kennungsinformation DEST-MAC-ID, wie oben beschrieben, ein Byte der Kennungsinformation DEST-MAC-ID repräsentiert den Zähler und die Bytes 6 bis 7 geben die Telegrammlänge TEL-LEN des ersten EtherCAT-Telegrammfragments ECAT1 wieder.

Das Byte 8 des Datenfelds D-CU2* umfasst die erste Telegramminformation, die mithilfe des Werts CMD=3 anzeigt, dass der zweite Verteilerknoten CU2 das ungeplante erste Telegramm-fragment ECAT1 vollständig über seine erste Ein-/Ausgabe-Schnittstelle an den ersten Verteilerknoten CU1 überträgt und keine weitere Fragmentierung vornimmt.

Das Byte 9 des Datenfelds D-CU2* kann in der ersten Telegramminformation weiterhin die Verteilerknoten-Identifikation FRAME-ID mit dem Wert X2 des zweiten Verteilerknotens CU2 aufweisen.

Die Bytes 10 bis 15 des Daten-Kopfsatzes HEAD5 des ungeplanten ersten Telegrammfragments ECAT1 mit dem Aufbau TEL6 können als Reserve Bytes RESERVE ausgebildet sein.

Die Bytes 16 bis 23 können den oben in Tabelle 1 beschriebenen Aufbau des Datenfelds D-CU3*, das dem dritten Verteilerknoten CU3 zugeordnet ist, haben und in gleicher Weise wie in Tabelle 1 erläutert belegt sein.

Ebenso wäre als Alternative denkbar, dass der zweite Verteilerknoten CU2 das ungeplante erste Telegrammfragment ECAT1 erneut fragmentiert und dann zusätzliche Informationen in den Daten-Kopfsatz HEAD5 über das erneut fragmentierte ungeplante erste Telegrammfragment ECAT1 einträgt.

Der erste Verteilerknoten CU1 empfängt das ungeplante erste Telegrammfragment ECAT1, das über die dritte Datenübertragungsstrecke D3 gesendet wurde über seine dritte Ein-/Ausgabe-Schnittstelle und geht bei der Auswertung des ungeplanten ersten Telegrammfragments ECAT1 in analoger Weise vor, wie der zweite Verteilerknoten CU2. Beispielsweise beginnt der erste Verteilerknoten CU1 mit der Auswertung der Kennungsinformation DEST-MAC-ID im Steuerabschnitt TEL des Daten-Kopfsatzes HEAD5. Der erste Verteilerknoten CU1 inkrementiert den Zähler um eins, sodass er den Wert drei anzeigt und fügt ferner zwischen dem Steuerabschnitt TEL im Daten-Kopfsatz HEAD5 des ungeplanten Telegrammfragments ECAT1 und dem Datenfeld D-CU2* des zweiten Verteilerknotens CU2 das dem ersten Verteilerknoten CU1 zugeordnete Datenfeld D-CU1* in den Daten-Kopfsatz HEAD6 des ungeplanten Telegrammfragments ECAT1 ein. Das nochmals erweiterte ungeplante erste EtherCAT-Telegrammfragment kann beispielsweise den siebten Telegrammaufbau TEL7 aufweisen.

Wenn der erste Verteilerknoten CU1 das nochmals erweiterte ungeplante erste Telegrammfragment ECAT1 erneut in beispielsweise zwei Fragmente ECAT2, ECAT3 unterteilt, bevor er es an den ersten Teilnehmer T1 im ersten Netzwerksegment N1 weitersendet, so kann der Daten-Kopfsatz HEAD6 des nochmals erweiterten Telegramms mit dem zweiten Telegramm-Fragment ECAT2 und dem siebten Telegrammaufbau TEL7 beispielsweise wie in Tabelle 3 aufgebaut sein.

**Tabelle 3**

| Byte-Nummer | Daten-Kopfsatz Abschnitt | Bezeichnung |
|---|---|---|
| 0-5 | TEL | DEST-MAC-ID |
| 6-7 | TEL | TEL-LEN |
| 8 | D-CU1* | CMD (Wert 4) |
| 9 | D-CU1* | FRAME-ID (Wert X1) |
| 10-11 | D-CU1* | OFFSET |
| 12 | D-CU1* | NEXT (Wert 1) |
| 13-15 | D-CU1* | RESERVE |
| 16 | D-CU2* | CMD (Wert 3) |
| 17 | D-CU2* | FRAME-ID (Wert X2) |
| 18-23 | D-CU2* | RESERVE |
| 24 | D-CU3* | CMD (Wert 4) |
| 25 | D-CU3* | FRAME-ID (Wert X3) |
| 26-27 | D-CU3* | OFFSET |
| 28 | D-CU3* | NEXT (Wert 1) |
| 29-31 | D-CU3* | RESERVE |

Die Bytes 0 bis 7 repräsentieren den Steuerabschnitt TEL des Daten-Kopfsatzes HEAD6 des nochmals erweiterten ungeplanten zweiten Telegrammfragments ECAT2 mit der Kennungsinformation DEST-MAC-ID und der Längeninformation TEL-LEN. Ein Byte der Kennungsinformation DEST-MAC-ID ist analog zur obigen Beschreibung für den Zähler vorgesehen. Der Zähler wird von dem ersten Verteilerknoten CU1 auf den Wert drei gesetzt, wie oben beschrieben.

Das Byte 8 des Datenfelds D-CU1* des ersten Verteilerknotens CU1 weist die zweite Telegramminformation auf. Die zweite Telegramminformation zeigt mit dem Wert CMD=4 an, dass der erste Verteilerknoten CU1 das nochmals erweiterte erste Telegrammfragment ECAT1 in zwei Fragmente ECAT2, ECAT3 unterteilt hat, wobei zunächst das zweite Telegramm-Fragment ECAT2 übertragen wird und demnach die Tabelle 3 den Aufbau des Daten-Kopfsatzes HEAD6 des zugehörigen zweiten Telegramm-Fragments ECAT2 angibt.

Zum Beispiel kann die Unterteilung des nochmals erweiterten ersten Telegrammfragments ECAT1 in zwei Telegramm-Fragmente ECAT2, ECAT3 darin begründet sein, dass das verbleibende Zeitfenster der Sende-Schnittstelle des ersten Verteilerknotens CU1 bis zur Übertragung des nächsten geplanten Telegramms nur für das Senden eines kleineren Telegramm-Fragments mit kürzerer Sende-Zeitdauer ausreicht.

Das Byte 9 umfasst in der zweiten Telegramminformation ferner die Verteilerknoten-Identifikation FRAME-ID des ersten Verteilerknotens CU1. Diese weist den Wert X1 auf und kann, wie die übrigen Verteilerknoten-Identifikationen bei einem neuen ungeplanten Telegramm wertmäßig erhöht werden.

Die Bytes 10 bis 11 des Datenfelds D-CU1* der zweiten Telegramminformation umfassen den Telegramm-Offset OFFSET. Dieser weist den Telegramm-Offset OFFSET Wert n=0 auf.

Das Byte 12 des Datenfelds D-CU1* NEXT zeigt durch den Wert 1 an, dass noch weitere Telegramm-Fragmente ECAT3, ECAT4 übertragen werden müssen.

Die Bytes 13 bis 15 bilden Reserve Bytes RESERVE, die unbelegt sein können.

Die Bytes 16 bis 23 sind für das Datenfeld D-CU2* des zweiten Verteilerknotens CU2 reserviert und können analog zur obigen Beschreibung aufgebaut und belegt sein.

Ebenso können die Bytes 24 bis 31 in gleicher Weise belegt und aufgebaut sein, wie die obige Beschreibung zum Datenfeld D-CU3*, das dem dritten Verteilerknoten CU3 zugeordnet ist.

Der Daten-Kopfsatz HEAD7 des dritten Telegramm-Fragments ECAT3 mit dem achten Telegrammaufbau TEL8 in Fig. 2B kann beispielsweise wie in Tabelle 4 aufgebaut sein.

**Tabelle 4**

| Byte-Nummer | Daten-Kopfsatz Abschnitt | Bezeichnung |
|---|---|---|
| 0-5 | TEL | DEST-MAC-ID |
| 6-7 | TEL | TEL-LEN |
| 8 | D-CU1* | CMD (Wert 4) |
| 9 | D-CU1* | FRAME-ID (Wert X1) |
| 10-11 | D-CU1* | OFFSET (Wert N) |
| 12 | D-CU1* | NEXT (Wert 0) |
| 13-15 | D-CU1* | RESERVE |
| 16 | D-CU2* | CMD (Wert 3) |
| 17 | D-CU2* | FRAME-ID (Wert X2) |
| 18-23 | D-CU2* | RESERVE |
| 24 | D-CU3* | CMD (Wert 4) |
| 25 | D-CU3* | FRAME-ID (Wert X3) |
| 26-27 | D-CU3* | OFFSET |
| 28 | D-CU3* | NEXT (Wert 1) |
| 29-31 | D-CU3* | RESERVE |

Der Aufbau und die Belegung der Bytes 0 bis 31 kann dabei dem Aufbau und der Belegung der Bytes des Daten-Kopfsatzes HEAD6 des zweiten Telegramm-Fragments ECAT2 in Tabelle 3 entsprechen. Aus diesem Grund werden für die nachfolgende Beschreibung der Tabelle 4 die Unterschiede und die möglichen Unterschiede der Bytes-Belegung des Daten-Kopfsatzes HEAD7 zum Daten-Kopfsatz HEAD6 herausgearbeitet.

Die Bytes 10 bis 11 des Datenfelds D-CU1* des ersten Verteilerknotens CU1 weisen in der zweiten Telegramminformation den Telegramm-Offset OFFSET auf. Der Telegramm-Offset OFFSET kann für den Daten-Kopfsatz HEAD7 des dritten Telegramm-Fragments ECAT3 den Wert n=N aufweisen, da die Position des im dritten Telegramm-Fragment ECAT3 enthaltenen ersten Nutzdatenblocks der Position N entsprechen kann. Zum Vergleich entspricht die Position des ersten im zweiten Telegramm-Fragment ECAT2 enthaltenen Nutzdatenblocks dem Wert n=0.

Ein möglicher Unterschied des Aufbaus des Daten-Kopfsatzes HEAD7 zum Aufbau des Daten-Kopfsatzes HEAD6 kann in den Bytes 6 bis 7 in Tabelle 4 liegen. Die Bytes 6 bis 7 geben die Telegrammlänge TEL-LEN wieder, inklusive dem Daten-Kopfsatz HEAD7. Es ist möglich, dass sich das dritte Telegramm-Fragment ECAT3 zur Länge des zweiten Telegramm-Fragments ECAT2 unterscheidet. Daher kann der Wert für die Telegrammlänge TEL-LEN für das dritte ungeplante Telegramm-Fragment ECAT3 in Tabelle 4 variieren.

Alternativ dazu ist es möglich, dass der erste Verteilerknoten CU1 das vom zweiten Verteilerknoten CU2 empfangene ungeplante erste Telegrammfragment ECAT1 nicht fragmentiert, bevor der erste Verteilerknoten das Telegramm an den ersten Teilnehmer des ersten Netzwerksegments weiterleitet. Dabei kann der Empfang des ungeplanten ersten Telegrammfragments ECAT1 und die Auswertung des zugehörigen Daten-Kopfsatzes des ungeplanten ersten Telegrammfragments ECAT1 analog dazu erfolgen, wie oben im Zusammenhang mit dem Empfang des ungeplanten zweiten Telegrammfragments ECAT2 mit dem siebten Telegrammaufbau TEL7 von dem ersten Verteilerknoten beschrieben wurde. Der Aufbau des nicht weiter fragmentierten ersten Telegrammfragments ECAT1, das von dem ersten Verteilerknoten CU1 über dessen erster Ein-/Ausgabe-Schnittstelle an den ersten Teilnehmer T1 im ersten Netzwerksegment N1 gesendet werden kann, ist in Fig. 2B nicht gezeigt. Der Daten-Kopfsatz des nicht erneut fragmentierten Telegrammfragments ECAT1 kann gemäß Tabelle 5 aufgebaut sein.

**Tabelle 5**

| Byte-Nummer | Daten-Kopfsatz Abschnitt | Bezeichnung |
|---|---|---|
| 0-5 | TEL | DEST-MAC-ID |
| 6-7 | TEL | TEL-LEN |
| 8 | D-CU1* | CMD (Wert 3) |
| 9 | D-CU1* | FRAME-ID (Wert X1) |
| 10-15 | D-CU1* | RESERVE |
| 16 | D-CU2* | CMD (Wert 3) |
| 17 | D-CU2* | FRAME-ID (Wert X2) |
| 18-23 | D-CU2* | RESERVE |
| 24 | D-CU3* | CMD (Wert 4) |
| 25 | D-CU3* | FRAME-ID (Wert X3) |
| 26-27 | D-CU3* | OFFSET |
| 28 | D-CU3* | NEXT (Wert 1) |
| 29-31 | D-CU3* | RESERVE |

Die Bytes 0 bis 7 sind analog zu den anderen Tabellen 1 bis 4 für den Steuerabschnitt TEL des Daten-Kopfsatzes reserviert. Sie umfassen die Kennungsinformation DEST-MAC-ID, sowie ein Byte der DEST-MAC-ID, das den Zähler aufweist. Weiterhin umfasst der Steuerabschnitt TEL in den Bytes 6 bis 7 die Länge TEL-LEN des nicht weiter fragmentierten ersten Telegrammfragments ECAT1.

Das Byte 8 des Datenfelds D-CU1* weist die erste Telegramminformation auf. In der ersten Telegramminformation kennzeichnet der erste Verteilerknoten CU1 mithilfe der Zuweisung CMD=3, dass er das nicht weiter fragmentierte erste Telegrammfragment ECAT1 vollständig an den ersten Teilnehmer überträgt. In diesem Zusammenhang kann die erste Telegramminformation weiterhin die Verteilerknoten-Identifikation FRAME-ID des ersten Verteilerknotens mit dem Wert X1 in dem Byte 9 aufweisen.

Die Bytes 10 bis 15 des Datenfelds D-CU1* können als Reserve Bytes RESERVE vorgesehen sein.

Des Weiteren können die Bytes 16 bis 23 für das Datenfeld D-CU2* des zweiten Verteilerknotens CU2, sowie die Bytes 24 bis 31 für das Datenfeld D-CU3* des dritten Verteilerknotens CU3 analog zur obigen Beschreibung belegt sein, in der der dritte Verteilerknoten CU3 das ungeplante EtherCAT-Telegramm ECAT fragmentiert und der zweite Verteilerknoten CU2 das erste Telegrammfragment ECAT1 ohne erneute Fragmentierung weiter an den ersten Verteilerknoten CU1 sendet.

Nach der Übertragung des dritten EtherCAT-Telegrammfragments ECAT3 durch den ersten Verteilerknoten CU1 an den ersten Teilnehmer T1 kann beispielsweise das vierte EtherCAT-Telegrammfragment ECAT4 mit dem Telegrammaufbau TEL9 und dem Daten-Kopfsatz HEAD8 von dem ersten Verteilerknoten CU1 an den ersten Teilnehmer T1, den Master-Teilnehmer, im ersten Netzwerksegment N1 übertragen werden. Um Wiederholungen zu vermeiden, sei angenommen, dass das vierte EtherCAT-Telegrammfragment ECAT4 analog zu der oben erfolgten Beschreibung zum ersten EtherCAT-Telegrammfragment ECAT1 vom dritten Verteilerknoten CU3 an den zweiten Verteilerknoten CU2 und vom zweiten Verteilerknoten CU2 an den ersten Verteilerknoten CU1 übertragen wurde. Im Unterschied zu der vorhergehenden Beschreibung wird das vierte EtherCAT-Telegrammfragment ECAT4 bei der Übertragung vom zweiten Verteilerknoten CU2 zum ersten Verteilerknoten CU1 nicht nochmals fragmentiert. Somit liegt dann bei der Übertragung des vierten EtherCAT-Telegrammfragments ECAT4 vom ersten Verteilerknoten CU1 an den ersten Teilnehmer T1 der in Fig. 2B dargestellte Telegrammaufbau TEL9 vor. Dabei können dieselben Ein-/Ausgabe-Schnittstellen der Verteilerknoten, die als die jeweiligen Sende-Schnittstellen der Verteilerknoten vorgesehen sind, für die Übertragung des ungeplanten vierten Telegrammfragments ECAT4 verwendet werden, wie sie oben beschrieben wurden.

Das vierte EtherCAT-Telegrammfragment ECAT4 kann beispielsweise dem Gegenstück des ersten EtherCAT-Telegrammfragments ECAT1 entsprechen und zusammen mit dem ungeplanten ersten EtherCAT-Telegrammfragment ECAT1, das in das zweite und dritte Telegrammfragment ECAT2, ECAT3 zerlegt wurde, das vollständige ungeplante EtherCAT-Telegramm ECAT bilden. Beispielsweise kann das Zeitfenster für die Übertragung des vierten EtherCAT-Telegrammfragments ECAT4 durch den dritten, zweiten und ersten Verteilerknoten ausreichen, um das ungeplante vierte Telegrammfragment ECAT4 mit dem Telegrammaufbau TEL9 in Fig. 2B vollständig an den Master-Teilnehmer zu übertragen. Die Verteilerknoten kennzeichnen die vollständige Übertragung des vierten Telegrammfragments ECAT4 mithilfe der ersten Telegramminformation, analog zur obigen Beschreibung. Alternativ dazu wäre eine erneute Fragmentierung bzw. mehrfache Fragmentierungen des ungeplanten vierten Telegrammfragments ECAT4 für die Übertragung denkbar. Dies ist in Fig. 2B jedoch nicht dargestellt. Der jeweilige, das ungeplante vierte EtherCAT-Telegrammfragment ECAT4 weiter fragmentierende Verteilerknoten hinterlegt die Fragmentierung des vierten Telegrammfragments ECAT4 dann in der zweiten Telegramminformation wie oben beschrieben samt der Verteilerknoten-Identifikation. An der Stelle wird auf eine Beschreibung der Belegung der einzelnen Bytes für den Daten-Kopfsatz HEAD8 des ungeplanten vierten Telegrammfragments ECAT4 mit dem Telegrammaufbau TEL9 gemäß den Tabellen 1 bis 5 verzichtet, denn die Belegung der Bytes des Daten-Kopfsatzes HEAD8 kann in vergleichbarer Weise erfolgen wie in den vorangehenden Tabellen.

Der erste Teilnehmer T1 in dem ersten Netzwerksegment N1, der zum Beispiel als Master-Teilnehmer ausgebildet sein kann, muss die Telegramm-Fragmente wieder zu einem vollständigen Telegramm zusammensetzen. Alternativ dazu können auch der erste, der zweite und/oder der dritte Verteilerknoten CU1, CU2 und/oder CU3 die einzelnen Telegrammfragmente, die sich beispielsweise aufgrund von Belegung der jeweiligen Datenübertragungsstrecke in ihren Speichern gesammelt haben, wieder zusammenfügen. Diese Vorgehensweise kann weiterhin zu einer effizienteren Datenübertragung beitragen, da weniger Daten-Kopfsätze übertragen werden müssen.

Der erste Teilnehmer T1, bzw. Master-Teilnehmer erkennt die zu einem ungeplanten EtherCAT-Telegramm gehörigen Telegramm-Fragmente daran, dass die Verteilerknoten-Identifikationen FRAME-IDs aller Datenfelder D-CU1*, D-CU2*, D-CU3* der Verteilerknoten in dem Daten-Kopfsatz des ungeplante Telegramms bei allen Telegramm-Fragmenten identisch sind. Im dargestellten Ausführungsbeispiel besitzen die Verteilerknoten-Identifikationen FRAME-IDs der Datenfelder D-CU1*, D-CU2*, D-CU3* der Verteilerknoten die Werte X1 (erster Verteilerknoten), X2 (zweiter Verteilerknoten) und X3 (dritter Verteilerknoten) für die oben beschriebenen ersten bis vierten Telegramm-Fragmente ECAT1-ECAT4. Bei einem neuen ungeplanten Telegramm würden die Werte der Verteilerknoten-Identifikationen FRAME-IDs von den erläuterten Werten abweichen und dadurch eine Identifikation dieses ungeplanten EtherCAT-Telegramms ECAT und eine Zuordnung möglicher erster bis vierter Telegramm-Fragmente ECAT1-ECAT4 des EtherCAT-Telegramms ECAT erlauben.

Der vorstehend erläuterte Datenaustausch ist für das EtherCAT-Protokoll optimiert. Beim EtherCAT-Protokoll ist es erforderlich den Daten-Kopfsatz des geplanten bzw. ungeplanten Telegramms zu entfernen, da der Slave-Teilnehmer als Empfänger des geplanten bzw. ungeplanten Telegramms diesen Teil des geplanten bzw. ungeplanten Telegramms nicht verarbeiten kann. Aus diesem Grund wird der Daten-Kopfsatz von den zu durchlaufenden Verteilerknoten auf dem Hinweg nach und nach aus dem ungeplanten Telegramm entfernt und jeweils zwischengespeichert, um dann auf dem Rückweg des ungeplanten Telegramms wieder in das ungeplante Telegramm eingefügt und mit zusätzlichen Informationen erweitert zu werden. Dabei können der Master-Teilnehmer oder die jeweiligen Verteilerknoten den Daten-Kopfsatz erzeugen. Alternativ wäre ebenfalls denkbar, dass der Slave-Teilnehmer in der Lage ist, den Daten-Kopfsatz des ungeplanten Telegramms zu generieren.

Die erfindungsgemäße Vorgehensweise kann auch bei solchen Verteilerknoten, die zum Beispiel als Switche ausgebildet sind, eingesetzt werden, bei denen der Sendezeitpunkt der geplanten, zyklischen Telegramme über eine Konfigurationsphase in den Verteilerknoten eingestellt wird. Auf diese Weise kann der Durchsatz von ungeplanten, azyklischen Telegrammen erhöht werden, da ein Teil des ungeplanten Telegramms, das heißt ein ungeplantes Telegramm-Fragment, jedoch nicht das vollständige ungeplante Telegramm noch übertragen werden kann, bevor die azyklische Phase zu Ende ist.

Weiterhin ist es möglich die Erfindung in Automatisierungskommunikationsnetzwerken einzusetzen, die nicht nach dem Master-Slave-Verwaltungsprinzip aufgebaut sind. Die Erfindung kann in allen Automatisierungskommunikationsnetzwerken eingesetzt werden, bei denen ein erster Teilnehmer in einem ersten Netzwerksegment, ein zweiter Teilnehmer in einem zweiten Netzwerksegment und wenigstens ein Verteilerknoten zwischen den beiden Teilnehmern angeordnet ist und eine Telegramm- bzw. Datenübertragung zwischen diesen beiden Teilnehmern stattfinden soll.

Wird anstelle des EtherCAT-Protokolls ein anderes Protokoll zum Datenaustausch verwendet, bei dem der oder die Slave-Teilnehmer den Daten-Kopfsatz verarbeiten können, ist es nicht erforderlich, dass die Verteilerknoten auf dem Hinweg des ungeplanten Telegramms zu dem Slave-Teilnehmer oder den Slave-Teilnehmern das ihnen zugeordnete Datenfeld aus dem Daten-Kopfsatz des ungeplanten Telegramms entfernen. Alternativ dazu kann nur der letzte Verteilerknoten dazu ausgebildet sein, die Datenfelder der Verteilerknoten aus dem Daten-Kopfsatz des ungeplanten Telegramms zu entfernen, wobei diese Möglichkeit ebenfalls entfallen kann, wenn der oder die Slave-Teilnehmer den Daten-Kopfsatz des ungeplanten Telegramms verarbeiten können. Der Daten-Kopfsatz bleibt dann in beiden genannten Fällen am ungeplanten Telegramm und kann von den Verteilerknoten ausgewertet und zusammen mit dem ungeplanten Telegramm weitergeleitet werden.

Ferner ist denkbar ein entsprechend ausgelegtes Protokoll zum Datenaustausch, sowie entsprechend ausgebildete Slave-Teilnehmer im Automatisierungskommunikationsnetzwerk einzusetzen, die den Daten-Kopfsatz des ungeplanten Telegramms verarbeiten können, und die Auswertung des Daten-Kopfsatzes in ein neues ungeplantes Telegramm einfügen, das sie zurück an den Master-Teilnehmer senden.

**Bezugszeichenliste**

| | |
|---|---|
| Erster Verteilerknoten | CU1 |
| Zweiter Verteilerknoten | CU2 |
| Dritter Verteilerknoten | CU3 |
| Vierter Verteilerknoten | CU4 |
| | |
| Erstes Netzwerksegment | N1 |
| Zweites Netzwerksegment | N2 |
| Drittes Netzwerksegment | N3 |
| Viertes Netzwerksegment | N4 |
| Fünftes Netzwerksegment | N5 |
| Sechstes Netzwerksegment | N6 |
| | |
| Erster Teilnehmer | T1 |
| Zweiter Teilnehmer | T2 |
| Dritter Teilnehmer | T3 |
| Vierter Teilnehmer | T4 |
| Fünfter Teilnehmer | T5 |
| Sechster Teilnehmer | T6 |
| | |
| Erste Datenübertragungsstrecke | D1 |
| Zweite Datenübertragungsstrecke | D2 |
| Dritte Datenübertragungsstrecke | D3 |
| Vierte Datenübertragungsstrecke | D4 |
| Fünfte Datenübertragungsstrecke | D5 |
| Sechste Datenübertragungsstrecke | D6 |
| Siebte Datenübertragungsstrecke | D7 |
| Achte Datenübertragungsstrecke | D8 |
| Neunte Datenübertragungsstrecke | D9 |
| | |
| Erster Telegrammaufbau | TEL1 |
| Zweiter Telegrammaufbau | TEL2 |
| Dritter Telegrammaufbau | TEL3 |
| Vierter Telegrammaufbau | TEL4 |
| Fünfter Telegrammaufbau | TEL5 |
| Sechster Telegrammaufbau | TEL6 |
| Siebter Telegrammaufbau | TEL7 |
| Achter Telegrammaufbau | TEL8 |
| Neunter Telegrammaufbau | TEL9 |
| | |
| Erster Daten-Kopfsatz | HEAD1 |
| Zweiter Daten-Kopfsatz | HEAD2 |
| Dritter Daten-Kopfsatz | HEAD3 |
| Vierter Daten-Kopfsatz | HEAD4 |
| Fünfter Daten-Kopfsatz | HEAD5 |
| Sechster Daten-Kopfsatz | HEAD6 |
| Siebter Daten-Kopfsatz | HEAD7 |
| Achter Daten-Kopfsatz | HEAD8 |
| | |
| Steuerabschnitt | TEL |
| | |
| Erstes Datenfeld (Hinweg) | D-CU1 |
| Zweites Datenfeld (Hinweg) | D-CU2 |
| Drittes Datenfeld (Hinweg) | D-CU3 |
| Erstes Datenfeld (Rückweg) | D-CU1* |
| Zweites Datenfeld (Rückweg) | D-CU2* |
| Drittes Datenfeld (Rückweg) | D-CU3* |
| | |
| EtherCAT-Telegramm | ECAT |
| Erstes EtherCAT-Telegrammfragment | ECAT1 |
| Zweites EtherCAT-Telegrammfragment | ECAT2 |
| Drittes EtherCAT-Telegrammfragment | ECAT3 |
| Viertes EtherCAT-Telegrammfragment | ECAT4 |

## Patentansprüche

1. Verfahren zur Datenübertragung in einem Automatisierungskommunikationsnetzwerk mit wenigstens einem Verteilerknoten (CU1, CU2, CU3, CU4), der mehrere Ein-/Ausgabe-Schnittstellen aufweist, die jeweils zumindest mit einem Netzwerksegment (N1, N2, N3, N4, N5, N6) in Verbindung stehen, wobei in einem ersten Netzwerksegment (N1) ein erster Teilnehmer (T1) und in einem zweiten Netzwerksegment (N2) ein zweiter Teilnehmer (T2) angeordnet sind,
wobei ein Datenaustausch zwischen dem ersten Teilnehmer (T1) und dem zweiten Teilnehmer (T2) in Form von Telegrammen erfolgt,
**dadurch gekennzeichnet, dass** die Telegramme als geplante Telegramme, die durch einen festen Sendezeitpunkt für die Übertragung durch den wenigstens einen Verteilerknoten (CU1, CU2, CU3) ausgezeichnet sind und als ungeplante Telegramme, die ohne einen festen Sendezeitpunkt für die Übertragung durch den wenigstens einen Verteilerknoten (CU1, CU2, CU3) ausgezeichnet sind, verwirklicht sind,
wobei den ungeplanten Telegrammen jeweils Steuerdaten für den Verteilerknoten (CU1, CU2, CU3, CU4) zugeordnet sind und die Steuerdaten ein Datenfeld (D-CU1, D-CU2, D-CU3, D-CU1*, D-CU2*, D-CU3*) aufweisen, das der Verteilerknoten (CU1, CU2, CU3, CU4) bearbeitet,
wobei der Verteilerknoten (CU1, CU2, CU3, CU4) ausgelegt ist, ein ungeplantes Telegramm auf einer Ein-/Ausgabe-Schnittstelle zu empfangen und auf einer weiteren Ein-/Ausgabe-Schnittstelle zu senden,
wobei der Verteilerknoten (CU1, CU2, CU3, CU4) ausgelegt ist, eine Sende-Zeitdauer für die Übertragung des ungeplanten Telegramms zu ermitteln,
wobei der Verteilerknoten (CU1, CU2, CU3, CU4) ausgelegt ist, ein bis zu einer Übertragung eines nächsten geplanten Telegramms verbleibendes Zeitfenster der Ein-/Ausgabe-Schnittstelle, die als die Sende-Schnittstelle für das ungeplante Telegramm vorgesehen ist, zu ermitteln und zu prüfen, ob das ungeplante Telegramm mit der Sende-Zeitdauer innerhalb des verbleibenden Zeitfensters übertragbar ist,
wobei der Verteilerknoten (CU1, CU2, CU3, CU4) das ungeplante Telegramm über die Sende-Schnittstelle überträgt, wenn das ungeplante Telegramm mit der Sende-Zeitdauer innerhalb des verbleibenden Zeitfensters der Sende-Schnittstelle bis zur Übertragung des nächsten geplanten Telegramms übertragbar ist,
wobei der Verteilerknoten (CU1, CU2, CU3, CU4) vor dem Übertragen des ungeplanten Telegramms im Datenfeld (D-CU1, D-CU2, D-CU3, D-CU1*, D-CU2*, D-CU3*) der Steuerdaten des ungeplanten Telegramms eine erste Telegramminformation einträgt, wobei die erste Telegramminformation anzeigt, dass das ungeplante Telegramm vollständig übertragen wird, und
wobei der Verteilerknoten (CU1, CU2, CU3, CU4) das ungeplante Telegramm fragmentiert, wenn das Telegramm mit der Sende-Zeitdauer nicht innerhalb des verbleibenden Zeitfensters der Sende-Schnittstelle bis zur Übertragung des nächsten geplanten Telegramms übertragbar ist,
wobei der Verteilerknoten (CU1, CU2, CU3, CU4) vor dem Übertragen des ungeplanten Telegramms im Datenfeld (D-CU1, D-CU2, D-CU3, D-CU1*, D-CU2*, D-CU3*) der Steuerdaten des ungeplanten Telegramms eine zweite Telegramminformation einträgt, wobei die zweite Telegramminformation anzeigt, dass das Telegramm fragmentiert wird und eine zusätzliche Verteilerknoten-Identifikation umfasst, die zur Unterscheidung der einzelnen Verteilerknoten (CU1, CU2, CU3, CU4) in dem Automatisierungskommunikationsnetzwerk dient.

2. Verfahren nach Anspruch 1,
wobei zwischen dem ersten Teilnehmer (T1) und dem zweiten Teilnehmer (T2) mehrere Verteilerknoten (CU1, CU2, CU3, CU4) angeordnet sind,
wobei dem jeweiligen Verteilerknoten (CU1, CU2, CU3, CU4) ein separates Datenfeld (D-CU1, D-CU2, D-CU3, D-CU1*, D-CU2*, D-CU3*) der Steuerdaten des ungeplanten Telegramms zugeordnet ist, das der jeweilige Verteilerknoten (CU1, CU2, CU3, CU4) eigenständig bearbeitet,
wobei der jeweilige Verteilerknoten (CU1, CU2, CU3, CU4) das ungeplante Telegramm, das von dem zweiten Teilnehmer (T2) an den ersten Teilnehmer (T1) übertragen wird, fragmentiert, wenn das ungeplante Telegramm mit der jeweiligen Sende-Zeitdauer nicht innerhalb des verbleibenden Zeitfensters der Sende-Schnittstelle bis zur Übertragung des nächsten geplanten Telegramms durch den jeweiligen Verteilerknoten (CU1, CU2, CU3, CU4) übertragbar ist,
wobei der jeweilige Verteilerknoten (CU1, CU2, CU3, CU4) vor dem Übertragen des ungeplanten Telegramms in dem ihm zugeordneten Datenfeld (D-CU1*, D-CU2*, D-CU3*) der Steuerdaten des ungeplanten Telegramms eine zweite Telegramminformation einträgt,
wobei die zweite Telegramminformation anzeigt, dass das ungeplante Telegramm fragmentiert wird und eine zusätzliche Verteilerknoten-Identifikation umfasst,
wobei die Verteilerknoten-Identifikation der zweiten Telegramminformation insbesondere eine zusätzliche Zuordnung zu dem entsprechenden ungeplanten Telegramm ermöglicht,
wobei die Verteilerknoten-Identifikation der zweiten Telegramminformation für ein neues ungeplantes Telegramm inkrementiert wird, und
wobei der jeweilige Verteilerknoten (CU1, CU2, CU3, CU4) das ungeplante Telegramm in Fragmenten überträgt.

3. Verfahren nach Anspruch 1 bis 2,
wobei der jeweilige Verteilerknoten (CU1, CU2, CU3, CU4) in dem ihm zugeordneten Datenfeld (D-CU1, D-CU2, D-CU3, D-CU1*, D-CU2*, D-CU3*) der Steuerdaten des ungeplanten Telegramms, in der zweiten Telegramminformation, einen Telegramm-Offset vermerkt, wenn der jeweilige Verteilerknoten (CU1, CU2, CU3, CU4) das ungeplante Telegramm fragmentiert,
wobei der Telegramm-Offset einen Wert n angibt, der eine Position eines ersten im ungeplanten Telegramm enthaltenen Nutzdatenblocks umfasst, und
wobei das erste Telegramm-Fragment insbesondere den Telegramm-Offset Wert n=0 aufweist.

4. Verfahren nach Anspruch 1 bis 3,
wobei der jeweilige Verteilerknoten (CU1, CU2, CU3, CU4) in dem ihm zugeordneten Datenfeld (D-CU1, D-CU2, D-CU3, D-CU1*, D-CU2*, D-CU3*) der Steuerdaten des ungeplanten Telegramms, in der zweiten Telegramminformation, hinterlegt, dass noch weitere Telegramm-Fragmente zu übertragen sind, wenn der jeweilige Verteilerknoten (CU1, CU2, CU3, CU4) das ungeplante Telegramm fragmentiert.

5. Verfahren nach Anspruch 1 bis 4,
wobei die Telegramme auf einem geschlossenen Datenübertragungsweg ausgehend vom ersten Teilnehmer (T1) zum zweiten Teilnehmer (T2), auf einem Hinweg, und zurück, ausgehend von dem zweiten Teilnehmer (T2) zu dem ersten Teilnehmer (T1), auf einem Rückweg, übertragen werden,
wobei der in dem ersten Netzwerksegment (N1) angeordnete erste Teilnehmer (T1) als Master-Teilnehmer verwirklicht ist, und
wobei der in dem zweiten Netzwerksegment (N2) angeordnete zweite Teilnehmer (T2) als Slave-Teilnehmer verwirklicht ist, wobei der Datenaustausch zwischen dem Master-Teilnehmer und dem Slave-Teilnehmer in Form der Telegramme von dem Master-Teilnehmer angestoßen wird,
wobei die Telegramme als die geplanten Telegramme mit dem festen Sendezeitpunkt für die Übertragung durch den wenigstens einen Verteilerknoten (CU1, CU2, CU3, CU4) und als die ungeplanten Telegramme ohne den festen Sendezeitpunkt, verwirklicht sind,
wobei der Master-Teilnehmer für die an den Slave-Teilnehmer auf dem Hinweg zu übertragenen ungeplanten Telegramme einen Daten-Kopfsatz (HEAD1, HEAD2, HEAD3) erzeugt, der einen Steuerabschnitt (TEL) und daran anschließend pro zu durchlaufendem Verteilerknoten (CU1, CU2, CU3, CU4) ein separates Verteilerknoten-Datenfeld (D-CU1, D-CU2, D-CU3) aufweist,
wobei der Verteilerknoten (CU1, CU2, CU3, CU4) für die zu übertragenen ungeplanten Telegramme des Slave-Teilnehmers auf dem Rückweg zu dem Master-Teilnehmer einen Daten-Kopfsatz (HEAD4, HEAD5, HEAD6, HEAD7, HEAD8) erzeugt, umfassend einen Steuerabschnitt (TEL) und ein Verteilerknoten-Datenfeld (D-CU1*, D-CU2*, D-CU3*), wenn das ungeplante Telegramm auf dem Rückweg keinen Daten-Kopfsatz (HEAD4, HEAD5, HEAD6, HEAD7, HEAD8) enthält,
wobei der Steuerabschnitt (TEL) des ungeplanten Telegramms insbesondere eine Längenangabe (TEL-LEN) des ungeplanten Telegramms aufweist,
wobei die Längenangabe (TEL-LEN) des ungeplanten Telegramms die Länge des Daten-Kopfsatzes (HEAD1, HEAD2, HEAD3, HEAD4, HEAD5, HEAD6, HEAD7, HEAD8) und eine Länge des Nutzdatenblocks des ungeplanten Telegramms umfasst, und
wobei die folgenden Verteilerknoten (CU1, CU2, CU3, CU4) für die zu übertragenen ungeplanten Telegramme den Daten-Kopfsatz (HEAD4, HEAD5, HEAD6, HEAD7, HEAD8) des ungeplanten Telegramms um das dem jeweiligen Verteilerknoten (CU1, CU2, CU3) zugeordnete Verteilerknoten-Datenfeld (D-CU1*, D-CU2*, D-CU3*) ergänzen.

6. Verfahren nach Anspruch 5,
wobei der Steuerabschnitt (TEL) des ungeplanten Telegramms einen Zähler aufweist, der ausgehend vom Master-Teilnehmer die Anzahl der vom ungeplanten Telegramm zu durchlaufenden Verteilerknoten (CU1, CU2, CU3, CU4) bis zum Slave-Teilnehmer bzw. der ausgehend vom Slave-Teilnehmer die Anzahl der vom ungeplanten Telegramm zu durchlaufenden Verteilerknoten (CU1, CU2, CU3, CU4) bis zum Master-Teilnehmer anzeigt,
wobei der Verteilerknoten (CU1, CU2, CU3, CU4) den Zähler beim Telegrammdurchlauf auf dem Hinweg vom Master-Teilnehmer zum Slave-Teilnehmer dekrementiert, und
wobei der Verteilerknoten (CU1, CU2, CU3, CU4) den Zähler beim Telegrammdurchlauf auf dem Rückweg vom Slave-Teilnehmer zum Master-Teilnehmer inkrementiert.

7. Verfahren nach Anspruch 1 bis 6,
wobei die geplanten Telegramme als zyklische Telegramme verwirklichbar sind, die zur Steuerung eines Automatisierungssystems dienen, und
wobei die ungeplanten Telegramme als azyklische Telegramme verwirklichbar sind.

8. Automatisierungskommunikationsnetzwerk mit wenigstens einem Verteilerknoten (CU1, CU2, CU3, CU4), der mehrere Ein-/Ausgabe-Schnittstellen aufweist, die jeweils zumindest mit einem Netzwerksegment (N1, N2, N3, N4, N5, N6) in Verbindung stehen, wobei in einem ersten Netzwerksegment (N1) ein erster Teilnehmer (T1) und in einem zweiten Netzwerksegment (N2) ein zweiter Teilnehmer (T2) angeordnet sind,
wobei ein Datenaustausch zwischen dem ersten Teilnehmer (T1) und dem zweiten Teilnehmer (T2) in Form von Telegrammen erfolgt,
**dadurch gekennzeichnet, dass** die Telegramme als geplante Telegramme, die durch einen festen Sendezeitpunkt für die Übertragung durch den wenigstens einen Verteilerknoten (CU1, CU2, CU3) ausgezeichnet sind und als ungeplante Telegramme, die ohne einen festen Sendezeitpunkt für die Übertragung durch den wenigstens einen Verteilerknoten (CU1, CU2, CU3) ausgezeichnet sind, verwirklicht sind,
wobei den ungeplanten Telegrammen jeweils Steuerdaten für den Verteilerknoten (CU1, CU2, CU3, CU4) zugeordnet sind und die Steuerdaten ein Datenfeld (D-CU1, D-CU2, D-CU3, D-CU1*, D-CU2*, D-CU3*) aufweisen, das der Verteilerknoten (CU1, CU2, CU3, CU4) bearbeitet,
wobei der Verteilerknoten (CU1, CU2, CU3, CU4) ausgelegt ist, das ungeplante Telegramm auf einer Ein-/Ausgabe-Schnittstelle zu empfangen und auf einer weiteren Ein-/Ausgabe-Schnittstelle zu senden,
wobei der Verteilerknoten (CU1, CU2, CU3, CU4) ausgelegt ist, eine Sende-Zeitdauer für die Übertragung des ungeplanten Telegramms zu ermitteln,
wobei der Verteilerknoten (CU1, CU2, CU3, CU4) ausgelegt ist, ein bis zu einer Übertragung eines nächsten geplanten Telegramms verbleibendes Zeitfenster der Ein-/Ausgabe-Schnittstelle, die als die Sende-Schnittstelle für das ungeplante Telegramm vorgesehen ist, zu ermitteln und zu prüfen, ob das ungeplante Telegramm mit der Sende-Zeitdauer innerhalb des verbleibenden Zeitfensters übertragbar ist,
wobei der Verteilerknoten (CU1, CU2, CU3, CU4) ausgebildet ist, das ungeplante Telegramm über die Sende-Schnittstelle zu übertragen, wenn das ungeplante Telegramm mit der Sende-Zeitdauer innerhalb des verbleibenden Zeitfensters der Sende-Schnittstelle bis zur Übertragung des nächsten geplanten Telegramms übertragbar ist,
wobei der Verteilerknoten (CU1, CU2, CU3, CU4) ausgelegt ist, vor dem Übertragen des ungeplanten Telegramms im Datenfeld der Steuerdaten des ungeplanten Telegramms eine erste Telegramminformation einzutragen,
wobei die erste Telegramminformation anzeigt, dass das ungeplante Telegramm vollständig übertragen wird, und
wobei der Verteilerknoten (CU1, CU2, CU3, CU4) ausgebildet ist, das ungeplante Telegramm zu fragmentieren, wenn das ungeplante Telegramm mit der Sende-Zeitdauer nicht innerhalb des verbleibenden Zeitfensters der Sende-Schnittstelle bis zur Übertragung des nächsten geplanten Telegramms übertragbar ist,
wobei der Verteilerknoten (CU1, CU2, CU3, CU4) ausgelegt ist, vor dem Übertragen des ungeplanten Telegramms im Datenfeld (D-CU1, D-CU2, D-CU3, D-CU1*, D-CU2*, D-CU3*) der Steuerdaten des ungeplanten Telegramms eine zweite Telegramminformation einzutragen,
wobei die zweite Telegramminformation anzeigt, dass das ungeplante Telegramm fragmentiert wird und eine zusätzliche Verteilerknoten-Identifikation umfasst, die zur Unterscheidung der einzelnen Verteilerknoten (CU1, CU2, CU3, CU4) in dem Automatisierungskommunikationsnetzwerk dient.

9. Automatisierungskommunikationsnetzwerk nach Anspruch 8, wobei zwischen dem ersten Teilnehmer (T1) und dem zweiten Teilnehmer (T2) mehrere Verteilerknoten (CU1, CU2, CU3, CU4) angeordnet sind,
wobei dem jeweiligen Verteilerknoten (CU1, CU2, CU3, CU4) ein separates Datenfeld (D-CU1, D-CU2, D-CU3, D-CU1*, D-CU2*, D-CU3*) der Steuerdaten zugeordnet ist, das der jeweilige Verteilerknoten (CU1, CU2, CU3, CU4) eigenständig bearbeitet, wobei der entsprechende Verteilerknoten (CU1, CU2, CU3, CU4) ausgebildet ist, das ungeplante Telegramm, das von dem zweiten Teilnehmer (T2) an den ersten Teilnehmer (T1) übertragen wird, zu fragmentieren, wenn das ungeplante Telegramm mit der jeweiligen Sende-Zeitdauer nicht innerhalb des verbleibenden Zeitfensters der Sende-Schnittstelle bis zur Übertragung des nächsten geplanten Telegramms durch den jeweiligen Verteilerknoten des entsprechenden Verteilerknotens (CU1, CU2, CU3, CU4) übertragbar ist und der jeweilige Verteilerknoten (CU1, CU2, CU3, CU4) ausgelegt ist, in dem ihm zugeordneten Datenfeld (D-CU1*, D-CU2*, D-CU3*) der Steuerdaten des ungeplanten Telegramms eine zweite Telegramminformation einzutragen, wobei die zweite Telegramminformation anzeigt, dass das Telegramm fragmentiert wird und eine zusätzliche Verteilerknoten-Identifikation umfasst,
wobei die Verteilerknoten-Identifikation der zweiten Telegramminformation insbesondere eine zusätzliche Zuordnung zu dem entsprechenden ungeplanten Telegramm ermöglicht,
wobei der Verteilerknoten (CU1, CU2, CU3, CU4) ausgebildet ist, die Verteilerknoten-Identifikation der zweiten Telegramminformation für ein neues ungeplantes Telegramm zu inkrementieren, und
wobei der jeweilige Verteilerknoten (CU1, CU2, CU3, CU4) das ungeplante Telegramm in Fragmenten überträgt.

10. Automatisierungskommunikationsnetzwerk nach Anspruch 8 bis 9,
wobei der jeweilige Verteilerknoten (CU1, CU2, CU3, CU4) ausgebildet ist, in dem ihm zugeordneten Datenfeld (D-CU1, D-CU2, D-CU3, D-CU1*, D-CU2*, D-CU3*) der Steuerdaten des ungeplanten Telegramms, in der zweiten Telegramminformation, einen Telegramm-Offset zu vermerken, wenn der jeweilige Verteilerknoten (CU1, CU2, CU3, CU4) das ungeplante Telegramm fragmentiert,
wobei der Telegramm-Offset einen Wert n angibt, der eine Position eines ersten im ungeplanten Telegramm enthaltenen Nutzdatenblocks umfasst, und
wobei das erste Telegramm-Fragment insbesondere den Telegramm-Offset Wert n=0 aufweist.

11. Automatisierungskommunikationsnetzwerk nach Anspruch 8 bis 10,
wobei der jeweilige Verteilerknoten (CU1, CU2, CU3, CU4) ausgebildet ist, in dem ihm zugeordneten Datenfeld (D-CU1, D-CU2, D-CU3, D-CU1*, D-CU2*, D-CU3*) der Steuerdaten des ungeplanten Telegramms, in der zweiten Telegramminformation, zu hinterlegen, dass noch weitere Telegramm-Fragmente zu übertragen sind, wenn der jeweilige Verteilerknoten (CU1, CU2, CU3, CU4) das ungeplante Telegramm fragmentiert.

12. Automatisierungskommunikationsnetzwerk nach Anspruch 8 bis 11,
wobei die Telegramme auf einem geschlossenen Datenübertragungsweg ausgehend vom ersten Teilnehmer (T1) zum zweiten Teilnehmer (T2), auf einem Hinweg, und zurück, ausgehend von dem zweiten Teilnehmer (T2) zu dem ersten Teilnehmer (T1), auf einem Rückweg, übertragen werden,
wobei der in dem ersten Netzwerksegment (N1) angeordnete erste Teilnehmer (T1) als Master-Teilnehmer verwirklicht ist, und
wobei der in dem zweiten Netzwerksegment (N2) angeordnete zweite Teilnehmer (T2) als Slave-Teilnehmer verwirklicht ist, wobei der Master-Teilnehmer ausgelegt ist, den Datenaustausch zwischen dem Master-Teilnehmer und dem Slave-Teilnehmer in Form der Telegramme anzustoßen,
wobei die Telegramme als die geplanten Telegramme mit dem festen Sendezeitpunkt für die Übertragung durch den wenigstens einen Verteilerknoten (CU1, CU2, CU3, CU4) und als die ungeplanten Telegramme ohne den festen Sendezeitpunkt, verwirklicht sind,
wobei der Master-Teilnehmer ausgebildet ist, für die an den Slave-Teilnehmer auf dem Hinweg zu übertragenen ungeplanten Telegramme einen Daten-Kopfsatz (HEAD1, HEAD2, HEAD3) zu erzeugen, der einen Steuerabschnitt (TEL) und daran anschließend pro zu durchlaufendem Verteilerknoten (CU1, CU2, CU3, CU4) ein separates Verteilerknoten-Datenfeld (D-CU1, D-CU2, D-CU3) aufweist,
wobei der Verteilerknoten (CU1, CU2, CU3, CU4) ausgelegt ist, für die zu übertragenen ungeplanten Telegramme des Slave-Teilnehmers auf dem Rückweg zu dem Master-Teilnehmer einen Daten-Kopfsatz (HEAD4, HEAD5, HEAD6, HEAD7, HEAD8) zu erzeugen, umfassend einen Steuerabschnitt (TEL) und ein Verteilerknoten-Datenfeld (D-CU1*, D-CU2*, D-CU3*), wenn das ungeplante Telegramm auf dem Rückweg keinen Daten-Kopfsatz (HEAD4, HEAD5, HEAD6, HEAD7, HEAD8) enthält, und
wobei die folgenden Verteilerknoten (CU1, CU2, CU3, CU4) ausgebildet sind, für die zu übertragenen ungeplanten Telegramme den Daten-Kopfsatz (HEAD4, HEAD5, HEAD6, HEAD7, HEAD8) des ungeplanten Telegramms um das dem jeweiligen Verteilerknoten (CU1, CU2, CU3, CU4) zugeordnete Verteilerknoten-Datenfeld (D-CU1*, D-CU2*, D-CU3*) zu ergänzen.

13. Automatisierungskommunikationsnetzwerk nach Anspruch 12,
wobei der Steuerabschnitt (TEL) des ungeplanten Telegramms eine Längenangabe (TEL-LEN) des ungeplanten Telegramms aufweist,
wobei die Längenangabe (TEL-LEN) des ungeplanten Telegramms die Länge des Daten-Kopfsatzes (HEAD1, HEAD2, HEAD3, HEAD4, HEAD5, HEAD6, HEAD7, HEAD8) und eine Länge des Nutzdatenblocks des ungeplanten Telegramms umfasst.

14. Automatisierungskommunikationsnetzwerk nach Anspruch 12 oder 13,
wobei der Steuerabschnitt (TEL) des ungeplanten Telegramms einen Zähler aufweist, der ausgehend vom Master-Teilnehmer die Anzahl der vom ungeplanten Telegramm zu durchlaufenden Verteilerknoten (CU1, CU2, CU3, CU4) bis zum Slave-Teilnehmer bzw. der ausgehend vom Slave-Teilnehmer die Anzahl der vom ungeplanten Telegramm zu durchlaufenden Verteilerknoten (CU1, CU2, CU3, CU4) bis zum Master-Teilnehmer anzeigt,
wobei der Verteilerknoten (CU1, CU2, CU3, CU4) ausgebildet ist, den Zähler beim Telegrammdurchlauf auf dem Hinweg vom Master-Teilnehmer zum Slave-Teilnehmer zu dekrementieren, und wobei der Verteilerknoten (CU1, CU2, CU3, CU4) ausgelegt ist, den Zähler beim Telegrammdurchlauf auf dem Rückweg vom Slave-Teilnehmer zum Master-Teilnehmer zu inkrementieren.

15. Automatisierungskommunikationsnetzwerk nach Anspruch 8 bis 14,
wobei die geplanten Telegramme als zyklische Telegramme ausgebildet sind, die zur Steuerung eines Automatisierungssystems dienen, und
wobei die ungeplanten Telegramme als azyklische Telegramme ausgebildet sind.

## Claims

1. Method for transmitting data in an automation communication network having at least one distribution node (CU1, CU2, CU3, CU4) that has multiple input/output interfaces that are each connected at least to one network segment (N1, N2, N3, N4, N5, N6), wherein a first subscriber (T1) is arranged in a first network segment (N1) and a second subscriber (T2) is arranged in a second network segment (N2),
wherein a data interchange takes place between the first subscriber (T1) and the second subscriber (T2) in the form of messages,
**characterized in that**
the messages are realised as scheduled messages, which are distinguished by a firm transmission time for the transmission by the at least one distribution node (CU1, CU2, CU3), and as unscheduled messages, which are distinguished without a firm transmission time for the transmission by the at least one distribution node (CU1, CU2, CU3),
wherein the unscheduled messages each have associated control data for the distribution node (CU1, CU2, CU3, CU4), and the control data comprise a data field (D-CU1, D-CU2, D-CU3, D-CU1*, D-CU2*, D-CU3*) that the distribution node (CU1, CU2, CU3, CU4) processes,
wherein the distribution node (CU1, CU2, CU3, CU4) is designed to receive an unscheduled message on an input/output interface and to send it on a further input/output interface,
wherein the distribution node (CU1, CU2, CU3, CU4) is designed to ascertain a transmission time duration for the transmission of the unscheduled message,
wherein the distribution node (CU1, CU2, CU3, CU4) is designed to ascertain a time window, remaining before a transmission of a next scheduled message, of the input/output interface, which is intended as the transmission interface for the unscheduled message, and to check whether the unscheduled message is transmittable with the transmission time duration within the remaining time window,
wherein the distribution node (CU1, CU2, CU3, CU4) transmits the unscheduled message via the transmission interface if the unscheduled message is transmittable with the transmission time duration within the remaining time window of the transmission interface before transmission of the next scheduled message,
wherein the distribution node (CU1, CU2, CU3, CU4) enters first message information in the data field (D-CU1, D-CU2, D-CU3, D-CU1*, D-CU2*, D-CU3*) of the control data of the unscheduled message before transmitting the unscheduled message,
wherein the first message information indicates that the unscheduled message is transmitted completely, and
wherein the distribution node (CU1, CU2, CU3, CU4) fragments the unscheduled message if the message is not transmittable with the transmission time duration within the remaining time window of the transmission interface before transmission of the next scheduled message,
wherein the distribution node (CU1, CU2, CU3, CU4) enters second message information in the data field D-CU1, D-CU2, D-CU3, D-CU1*, D-CU2*, D-CU3*) of the control data of the unscheduled message before transmitting the unscheduled message,
wherein the second message information indicates that the message is fragmented and comprises an additional distribution node identification that is used to distinguish between the individual distribution nodes (CU1, CU2, CU3, CU4) in the automation communication network.

2. Method according to Claim 1,
wherein multiple distribution nodes (CU1, CU2, CU3, CU4) are arranged between the first subscriber (T1) and the second subscriber (T2),
wherein the respective distribution node (CU1, CU2, CU3, CU4) has a separate associated data field (D-CU1, D-CU2, D-CU3, D-CU1*, D-CU2*, D-CU3*) of the control data of the unscheduled message that the respective distribution node (CU1, CU2, CU3, CU4) processes independently,
wherein the respective distribution node (CU1, CU2, CU3, CU4) fragments the unscheduled message transmitted from the second subscriber (T2) to the first subscriber (T1) if the unscheduled message is not transmittable with a respective transmission time duration within the remaining time window of the transmission interface before transmission of the next scheduled message by the respective distribution node (CU1, CU2, CU3, CU4), wherein the respective distribution node (CU1, CU2, CU3, CU4) enters second message information in its associated data field (D-CU1*, D-CU2*, D-CU3*) of the control data of the unscheduled message before transmitting the unscheduled message,
wherein the second message information indicates that the unscheduled message is fragmented and comprises an additional distribution node identification,
wherein the distribution node identification of the second message information allows in particular an additional association with the applicable unscheduled message,
wherein the distribution node identification of the second message information is incremented for a new unscheduled message, and
wherein the respective distribution node (CU1, CU2, CU3, CU4) transmits the unscheduled message in fragments.

3. Method according to Claims 1 and 2,
wherein the respective distribution node (CU1, CU2, CU3, CU4) records a message offset in its associated data field (D-CU1, D-CU2, D-CU3, D-CU1*, D-CU2*, D-CU3*) of the control data of the unscheduled message, in the second message information, if the respective distribution node (CU1, CU2, CU3, CU4) fragments the unscheduled message,
wherein the message offset indicates a value n that comprises a position of a first payload data block that the unscheduled message contains, and wherein the first message fragment comprises in particular the message offset value n=0.

4. Method according to Claims 1 to 3,
wherein the respective distribution node (CU1, CU2, CU3, CU4) sets down in its associated data field (D-CU1, D-CU2, D-CU3, D-CU1*, D-CU2*, D-CU3*) of the control data of the unscheduled message, in the second message information, that other message fragments still need to be transmitted if the respective distribution node (CU1, CU2, CU3, CU4) fragments the unscheduled message.

5. Method according to Claims 1 to 4,
wherein the messages are transmitted on a restricted data transmission path from the first subscriber (T1) to the second subscriber (T2), on an outgoing path, and back, from the second subscriber (T2) to the first subscriber (T1), on a return path, wherein the first subscriber (T1) arranged in the first network segment (N1) is realised as master subscriber, and
wherein the second subscriber (T2) arranged in the second network segment (N2) is realised as slave subscriber,
wherein the data interchange between the master subscriber and the slave subscriber in the form of the messages is initiated by the master subscriber, wherein the messages are realised as the scheduled messages with the firm transmission time for the transmission by the at least one distribution node (CU1, CU2, CU3, CU4) and as the unscheduled messages without the firm transmission time,
wherein the master subscriber produces a data header record (HEAD1, HEAD2, HEAD3) for the unscheduled messages to be transmitted to the slave subscriber on the outgoing path, which data header comprises a control section (TEL) and subsequently, for each distribution node (CU1, CU2, CU3, CU4) to be passed through, a separate distribution node data field (D-CU1, D-CU2, D-CU3),
wherein the distribution node (CU1, CU2, CU3, CU4) produces a data header record (HEAD4, HEADS, HEAD6, HEAD7, HEAD8), comprising a control section (TEL) and a distribution node data field (D-CU1*, D-CU2*, D-CU3*), for the unscheduled messages of the slave subscriber that are to be transmitted on the return path to the master subscriber if the unscheduled message does not contain a data header record (HEAD4, HEADS, HEAD6, HEAD7, HEAD8) on the return path,
wherein the control section (TEL) of the unscheduled message has in particular a length statement (TEL-LEN) of the unscheduled message,
wherein the length statement (TEL-LEN) of the unscheduled message comprises the length of the data header record (HEAD1, HEAD2, HEAD3, HEAD4, HEADS, HEAD6, HEAD7, HEAD8) and a length of the payload data block of the unscheduled message, and wherein the subsequent distribution nodes (CU1, CU2, CU3, CU4) complement the data header record (HEAD4, HEAD5, HEAD6, HEAD7, HEAD8) of the unscheduled message with the distribution node data field (D-CU1*, D-CU2*, D-CU3*) associated with the respective distribution node (CU1, CU2, CU3) for the unscheduled messages that are to be transmitted.

6. Method according to Claim 5,
wherein the control section (TEL) of the unscheduled message has a counter indicating the number of distribution nodes (CU1, CU2, CU3, CU4), starting from the master subscriber, through which the unscheduled message needs to pass to the slave subscriber or indicating the number of distribution nodes (CU1, CU2, CU3, CU4), starting from the slave subscriber, through which the unscheduled message needs to pass to the master subscriber,
wherein the distribution node (CU1, CU2, CU3, CU4) decrements the counter when a message passes through on the outgoing path from the master subscriber to the slave subscriber, and
wherein the distribution node (CU1, CU2, CU3, CU4) increments the counter when a message passes through on the return path from the slave subscriber to the master subscriber.

7. Method according to Claims 1 to 6,
wherein the scheduled messages are realisable as cyclic messages used for controlling an automation system, and
wherein the unscheduled messages are realisable as acyclic messages.

8. Automation communication network having at least one distribution node (CU1, CU2, CU3, CU4) that comprises multiple input/output interfaces that are each connected at least to one network segment (N1, N2, N3, N4, N5, N6), wherein a first subscriber (T1) is arranged in a first network segment (N1) and a second subscriber (T2) is arranged in a second network segment (N2),
wherein a data interchange takes place between the first subscriber (T1) and the second subscriber (T2) in the form of messages,
**characterized in that**
the messages are realised as scheduled messages, which are distinguished by a firm transmission time for the transmission by the at least one distribution node (CU1, CU2, CU3), and as unscheduled messages, which are distinguished without a firm transmission time for the transmission by the at least one distribution node (CU1, CU2, CU3),
wherein the unscheduled messages each have associated control data for the distribution node (CU1, CU2, CU3, CU4), and the control data comprise a data field (D-CU1, D-CU2, D-CU3, D-CU1*, D-CU2*, D-CU3*) that the distribution node (CU1, CU2, CU3, CU4) processes,
wherein the distribution node (CU1, CU2, CU3, CU4) is designed to receive the unscheduled message on an input/output interface and to send it on a further input/output interface,
wherein the distribution node (CU1, CU2, CU3, CU4) is designed to ascertain a transmission time duration for the transmission of the unscheduled message,
wherein the distribution node (CU1, CU2, CU3, CU4) is designed to ascertain a time window, remaining before a transmission of a next scheduled message, of the input/output interface, which is intended as the transmission interface for the unscheduled message, and to check whether the unscheduled message is transmittable with the transmission time duration within the remaining time window,
wherein the distribution node (CU1, CU2, CU3, CU4) is designed to transmit the unscheduled message via the transmission interface if the unscheduled message is transmittable with the transmission time duration within the remaining time window of the transmission interface before transmission of the next scheduled message,
wherein the distribution node (CU1, CU2, CU3, CU4) is designed to enter first message information in the data field of the control data of the unscheduled message before transmitting the unscheduled message,
wherein the first message information indicates that the unscheduled message is transmitted completely, and
wherein the distribution node (CU1, CU2, CU3, CU4) is designed to fragment the unscheduled message if the unscheduled message is not transmittable with the transmission time duration within the remaining time window of the transmission interface before transmission of the next scheduled message, wherein the distribution node (CU1, CU2, CU3, CU4) is designed to enter second message information in the data field D-CU1, D-CU2, D-CU3, D-CU1*, D-CU2*, D-CU3*) of the control data of the unscheduled message before transmitting the unscheduled message,
wherein the second message information indicates that the unscheduled message is fragmented and comprises an additional distribution node identification that is used to distinguish between the individual distribution nodes (CU1, CU2, CU3, CU4) in the automation communication network.

9. Automation communication network according to Claim 8,
wherein multiple distribution nodes (CU1, CU2, CU3, CU4) are arranged between the first subscriber (T1) and the second subscriber (T2),
wherein the respective distribution node (CU1, CU2, CU3, CU4) has a separate associated data field (D-CU1, D-CU2, D-CU3, D-CU1*, D-CU2*, D-CU3*) of the control data that the respective distribution node (CU1, CU2, CU3, CU4) processes independently, wherein the respective distribution node (CU1, CU2, CU3, CU4) is designed to fragment the unscheduled message transmitted from the second subscriber (T2) to the first subscriber (T1) if the unscheduled message is not transmittable with a respective transmission time duration within the remaining time window of the transmission interface before transmission of the next scheduled message by the respective distribution node (CU1, CU2, CU3, CU4) and the respective distribution node (CU1, CU2, CU3, CU4) is designed to enter second message information in its associated data field (D-CU1*, D-CU2*, D-CU3*) of the control data of the unscheduled message,
wherein the second message information indicates that the message is fragmented and comprises an additional distribution node identification, wherein the distribution node identification of the second message information allows in particular an additional association with the applicable unscheduled message,
wherein the distribution node (CU1, CU2, CU3, CU4) is designed to increment the distribution node identification of the second message information for a new unscheduled message, and
wherein the respective distribution node (CU1, CU2, CU3, CU4) transmits the unscheduled message in fragments.

10. Automation communication network according to Claims 8 and 9,
wherein the respective distribution node (CU1, CU2, CU3, CU4) is designed to record a message offset in its associated data field (D-CU1, D-CU2, D-CU3, D-CU1*, D-CU2*, D-CU3*) of the control data of the unscheduled message, in the second message information, if the respective distribution node (CU1, CU2, CU3, CU4) fragments the unscheduled message,
wherein the message offset indicates a value n that comprises a position of a first payload data block that the unscheduled message contains, and wherein the first message fragment comprises in particular the message offset value n=0.

11. Automation communication network according to Claims 8 to 10,
wherein the respective distribution node (CU1, CU2, CU3, CU4) is designed to set down in its associated data field (D-CU1, D-CU2, D-CU3, D-CU1*, D-CU2*, D-CU3*) of the control data of the unscheduled message, in the second message information, that other message fragments still need to be transmitted if the respective distribution node (CU1, CU2, CU3, CU4) fragments the unscheduled message.

12. Automation communication network according to Claims 8 to 11,
wherein the messages are transmitted on a restricted data transmission path from the first subscriber (T1) to the second subscriber (T2), on an outgoing path, and back, from the second subscriber (T2) to the first subscriber (T1), on a return path, wherein the first subscriber (T1) arranged in the first network segment (N1) is realised as master subscriber, and
wherein the second subscriber (T2) arranged in the second network segment (N2) is realised as slave subscriber,
wherein the master subscriber is designed to initiate the data interchange between the master subscriber and the slave subscriber in the form of the messages,
wherein the messages are realised as the scheduled messages with the firm transmission time for the transmission by the at least one distribution node (CU1, CU2, CU3, CU4) and as the unscheduled messages without the firm transmission time,
wherein the master subscriber is designed to produce a data header record (HEAD1, HEAD2, HEAD3) for the unscheduled messages to be transmitted to the slave subscriber on the outgoing path, which data header comprises a control section (TEL) and subsequently, for each distribution node (CU1, CU2, CU3, CU4) to be passed through, a separate distribution node data field (D-CU1, D-CU2, D-CU3),
wherein the distribution node (CU1, CU2, CU3, CU4) is designed to produce a data header record (HEAD4, HEAD5, HEAD6, HEAD7, HEAD8), comprising a control section (TEL) and a distribution node data field (D-CU1*, D-CU2*, D-CU3*), for the unscheduled messages of the slave subscriber that are to be transmitted on the return path to the master subscriber if the unscheduled message does not contain a data header record (HEAD4, HEAD5, HEAD6, HEAD7, HEAD8) on the return path, and
wherein the subsequent distribution nodes (CU1, CU2, CU3, CU4) are designed to complement the data header record (HEAD4, HEAD5, HEAD6, HEAD7, HEAD8) of the unscheduled message with the distribution node data field (D-CU1*, D-CU2*, D-CU3*) associated with the respective distribution node (CU1, CU2, CU3, CU4) for the unscheduled messages that are to be transmitted.

13. Automation communication network according to Claim 12,
wherein the control section (TEL) of the unscheduled message comprises a length statement (TEL-LEN) of the unscheduled message,
wherein the length statement (TEL-LEN) of the unscheduled message comprises the length of the data header record (HEAD1, HEAD2, HEAD3, HEAD4, HEAD5, HEAD6, HEAD7, HEAD8) and a length of the payload data block of the unscheduled message.

14. Automation communication network according to Claim 12 or 13,
wherein the control section (TEL) of the unscheduled message has a counter indicating the number of distribution nodes (CU1, CU2, CU3, CU4), starting from the master subscriber, through which the unscheduled message needs to pass to the slave subscriber or indicating the number of distribution nodes (CU1, CU2, CU3, CU4), starting from the slave subscriber, through which the unscheduled message needs to pass to the master subscriber,
wherein the distribution node (CU1, CU2, CU3, CU4) is designed to decrement the counter when a message passes through on the outgoing path from the master subscriber to the slave subscriber, and
wherein the distribution node (CU1, CU2, CU3, CU4) is designed to increment the counter when a message passes through on the return path from the slave subscriber to the master subscriber.

15. Automation communication network according to Claims 8 to 14,
wherein the scheduled messages are in the form of cyclic messages used for controlling an automation system, and
wherein the unscheduled messages are in the form of acyclic messages.

## Revendications

1. Procédé de transmission de données dans un réseau de communication d'automatisation comprenant au moins un nœud de distribution (CU1, CU2, CU3, CU4), qui possède plusieurs interfaces d'entrée/sortie qui sont respectivement en liaison avec au moins un segment de réseau (N1, N2, N3, N4, N5, N6), un premier participant (T1) étant disposé dans un premier segment de réseau (N1) et un deuxième participant (T2) étant disposé dans un deuxième segment de réseau (N2),
un échange de données entre le premier participant (T1) et le deuxième participant (T2) s'effectuant sous la forme de télégrammes,
**caractérisé en ce que**
les télégrammes sont réalisés sous la forme de télégrammes planifiés, qui sont **caractérisés par** un instant d'émission fixe pour la transmission par l'au moins un nœud de distribution (CU1, CU2, CU3), et sous la forme de télégrammes non planifiés, qui sont **caractérisés par** l'absence d'instant d'émission fixe pour la transmission par l'au moins un nœud de distribution (CU1, CU2, CU3),
des données de commande pour le nœud de distribution (CU1, CU2, CU3, CU4) étant respectivement associées aux télégrammes non planifiés et les données de commande possédant un champ de données (D-CU1, D-CU2, D-CU3, D-CU1*, D-CU2*, D-CU3*) que traite le nœud de distribution (CU1, CU2, CU3, CU4),
le nœud de distribution (CU1, CU2, CU3, CU4) étant conçu pour recevoir un télégramme non planifié sur une interface d'entrée/sortie et l'émettre sur une autre interface d'entrée/sortie,
le nœud de distribution (CU1, CU2, CU3, CU4) étant conçu pour déterminer une durée d'émission pour la transmission du télégramme non planifié,
le nœud de distribution (CU1, CU2, CU3, CU4) étant conçu pour déterminer une fenêtre temporelle restante de l'interface d'entrée/sortie, qui est prévue comme interface d'émission pour le télégramme non planifié, jusqu'à une transmission d'un prochain télégramme planifié et pour vérifier si le télégramme non planifié ayant la durée d'émission peut être transmis à l'intérieur de la fenêtre temporelle restante,
le nœud de distribution (CU1, CU2, CU3, CU4) transmettant le télégramme non planifié par le biais de l'interface d'émission lorsque le télégramme non planifié ayant la durée d'émission peut être transmis à l'intérieur de la fenêtre temporelle restante de l'interface d'émission jusqu'à la transmission du prochain télégramme planifié, le nœud de distribution (CU1, CU2, CU3, CU4) introduisant une première information de télégramme dans le champ de données (D-CU1, D-CU2, D-CU3, D-CU1*, D-CU2*, D-CU3*) des données de commande du télégramme non planifié avant la transmission du télégramme non planifié,
la première information de télégramme indiquant que le télégramme non planifié est transmis dans son intégralité, et
le nœud de distribution (CU1, CU2, CU3, CU4) fragmentant le télégramme non planifié lorsque le télégramme non planifié ayant la durée d'émission ne peut pas être transmis à l'intérieur de la fenêtre temporelle restante de l'interface d'émission jusqu'à la transmission du prochain télégramme planifié,
le nœud de distribution (CU1, CU2, CU3, CU4) introduisant une deuxième information de télégramme dans le champ de données (D-CU1, D-CU2, D-CU3, D-CU1*, D-CU2*, D-CU3*) des données de commande du télégramme non planifié avant la transmission du télégramme non planifié,
la deuxième information de télégramme indiquant que le télégramme est fragmenté et comportant une identification de nœud de distribution supplémentaire qui sert à différencier les nœuds de distribution (CU1, CU2, CU3, CU4) individuels dans le réseau de communication d'automatisation.

2. Procédé selon la revendication 1,
plusieurs nœuds de distribution (CU1, CU2, CU3, CU4) étant disposés entre le premier participant (T1) et le deuxième participant (T2),
un champ de données (D-CU1, D-CU2, D-CU3, D-CU1*, D-CU2*, D-CU3*) séparé des données de commande du télégramme non planifié étant associé au nœud de distribution (CU1, CU2, CU3, CU4) respectif, que traite indépendamment le nœud de distribution (CU1, CU2, CU3, CU4) respectif,
le nœud de distribution (CU1, CU2, CU3, CU4) respectif fragmentant le télégramme non planifié qui est transmis du deuxième participant (T2) au premier participant (T1) lorsque le télégramme non planifié ayant la durée d'émission respective ne peut pas être transmis à l'intérieur de la fenêtre temporelle restante de l'interface d'émission jusqu'à la transmission du prochain télégramme planifié par le nœud de distribution (CU1, CU2, CU3, CU4) respectif,
le nœud de distribution (CU1, CU2, CU3, CU4) respectif introduisant une deuxième information de télégramme dans le champ de données (D-CU1*, D-CU2*, D-CU3*) qui lui est associé des données de commande du télégramme non planifié avant la transmission du télégramme non planifié, la deuxième information de télégramme indiquant que le télégramme non planifié est fragmenté et comportant une identification de nœud de distribution supplémentaire, l'identification de nœud de distribution de la deuxième information de télégramme rendant notamment possible une association supplémentaire au télégramme non planifié correspondant,
l'identification de nœud de distribution de la deuxième information de télégramme étant incrémentée pour un nouveau télégramme non planifié, et
le nœud de distribution (CU1, CU2, CU3, CU4) respectif transmettant le télégramme non planifié en fragments.

3. Procédé selon les revendications 1 à 2,
le nœud de distribution (CU1, CU2, CU3, CU4) respectif notant un décalage de télégramme dans la deuxième information de télégramme, dans le champ de données (D-CU1, D-CU2, D-CU3, D-CU1*, D-CU2*, D-CU3*) qui lui est associé des données de commande du télégramme non planifié, lorsque le nœud de distribution (CU1, CU2, CU3, CU4) respectif fragmente le télégramme non planifié,
le décalage de télégramme indiquant une valeur n qui comprend une position d'un premier bloc de données utiles contenu dans le télégramme non planifié, et
le premier fragment de télégramme, notamment le décalage de télégramme, présentant la valeur n = 0.

4. Procédé selon les revendications 1 à 3,
le nœud de distribution (CU1, CU2, CU3, CU4) respectif consignant dans la deuxième information de télégramme, dans le champ de données (D-CU1, D-CU2, D-CU3, D-CU1*, D-CU2*, D-CU3*) qui lui est associé des données de commande du télégramme non planifié, que des fragments de télégramme supplémentaires sont encore à transmettre lorsque le nœud de distribution (CU1, CU2, CU3, CU4) respectif fragmente le télégramme non planifié.

5. Procédé selon les revendications 1 à 4,
les télégrammes étant transmis sur un trajet de transmission de données fermé en partant du premier participant (T1) vers le deuxième participant (T2), sur un trajet aller, et en retour en partant du deuxième participant (T2) vers le premier participant (T1), sur un trajet de retour,
le premier participant (T1) disposé dans le premier segment de réseau (N1) étant réalisé sous la forme d'un participant maître, et
le deuxième participant (T2) disposé dans le deuxième segment de réseau (N2) étant réalisé sous la forme d'un participant esclave,
l'échange de données entre le participant maître et le participant esclave sous la forme des télégrammes étant déclenché par le participant maître,
les télégrammes étant réalisés sous la forme des télégrammes planifiés ayant l'instant d'émission fixe pour la transmission par l'au moins un nœud de distribution (CU1, CU2, CU3, CU4), et sous la forme des télégrammes non planifiés sans l'instant d'émission fixe, le participant maître générant un jeu de données d'entête (HEAD1, HEAD2, HEAD3) pour les télégrammes non planifiés à transmettre au participant esclave sur le trajet aller, lequel possède une portion de commande (TEL) et, rattaché à celle-ci, un champ de données de nœud de distribution (D-CU1, D-CU2, D-CU3) séparé pour chaque nœud de distribution (CU1, CU2, CU3, CU4) à traverser, le nœud de distribution (CU1, CU2, CU3, CU4) générant un jeu de données d'en-tête (HEAD4, HEAD5, HEAD6, HEAD7, HEAD8) pour les télégrammes non planifiés du participant esclave à transmettre sur le trajet de retour vers le participant maître, comportant une portion de commande (TEL) et un champ de données de nœud de distribution (D-CU1*, D-CU2*, D-CU3*) lorsque le télégramme non planifié sur le trajet de retour ne contient aucun jeu de données d'en-tête (HEAD4, HEAD5, HEAD6, HEAD7, HEAD8),
la portion de commande (TEL) du télégramme non planifié possédant notamment une indication de longueur (TEL-LEN) du télégramme non planifié,
l'indication de longueur (TEL-LEN) du télégramme non planifié comprenant la longueur du jeu de données d'entête (HEAD1, HEAD2, HEAD3, HEAD4, HEAD5, HEAD6, HEAD7, HEAD8) et une longueur du bloc de données utiles du télégramme non planifié, et
les nœuds de distribution (CU1, CU2, CU3, CU4) suivants pour les télégrammes non planifiés à transmettre complétant le jeu de données d'en-tête (HEAD4, HEAD5, HEAD6, HEAD7, HEAD8) du télégramme non planifié avec le champ de données de nœud de distribution (D-CU1*, D-CU2*, D-CU3*) associé au nœud de distribution (CU1, CU2, CU3) respectif.

6. Procédé selon la revendication 5,
la portion de commande (TEL) du télégramme non planifié possédant un compteur qui, à partir du participant maître, indique le nombre de nœuds de distribution (CU1, CU2, CU3, CU4) à traverser par le télégramme non planifié jusqu'au participant esclave ou, à partir du participant esclave, le nombre de nœuds de distribution (CU1, CU2, CU3, CU4) à traverser par le télégramme non planifié jusqu'au participant maître,
le nœud de distribution (CU1, CU2, CU3, CU4) décrémentant le compteur lors du passage du télégramme sur le trajet aller du participant maître au participant esclave, et le nœud de distribution (CU1, CU2, CU3, CU4) incrémentant le compteur lors du passage du télégramme sur le trajet de retour du participant esclave au participant maître.

7. Procédé selon les revendications 1 à 6,
les télégrammes planifiés pouvant être réalisés sous la forme de télégrammes cycliques qui servent à la commande d'un système d'automatisation, et
les télégrammes non planifiés pouvant être réalisés sous la forme de télégrammes acycliques.

8. Réseau de communication d'automatisation comprenant au moins un nœud de distribution (CU1, CU2, CU3, CU4), qui possède plusieurs interfaces d'entrée/sortie qui sont respectivement en liaison avec au moins un segment de réseau (N1, N2, N3, N4, N5, N6), un premier participant (T1) étant disposé dans un premier segment de réseau (N1) et un deuxième participant (T2) étant disposé dans un deuxième segment de réseau (N2),
un échange de données entre le premier participant (T1) et le deuxième participant (T2) s'effectuant sous la forme de télégrammes,
**caractérisé en ce que**
les télégrammes sont réalisés sous la forme de télégrammes planifiés, qui sont **caractérisés par** un instant d'émission fixe pour la transmission par l'au moins un nœud de distribution (CU1, CU2, CU3), et sous la forme de télégrammes non planifiés, qui sont **caractérisés par** l'absence d'instant d'émission fixe pour la transmission par l'au moins un nœud de distribution (CU1, CU2, CU3),
des données de commande pour le nœud de distribution (CU1, CU2, CU3, CU4) étant respectivement associées aux télégrammes non planifiés et les données de commande possédant un champ de données (D-CU1, D-CU2, D-CU3, D-CU1*, D-CU2*, D-CU3*) que traite le nœud de distribution (CU1, CU2, CU3, CU4),
le nœud de distribution (CU1, CU2, CU3, CU4) étant conçu pour recevoir le télégramme non planifié sur une interface d'entrée/sortie et l'émettre sur une autre interface d'entrée/sortie,
le nœud de distribution (CU1, CU2, CU3, CU4) étant conçu pour déterminer une durée d'émission pour la transmission du télégramme non planifié,
le nœud de distribution (CU1, CU2, CU3, CU4) étant conçu pour déterminer une fenêtre temporelle restante de l'interface d'entrée/sortie, qui est prévue comme interface d'émission pour le télégramme non planifié, jusqu'à une transmission d'un prochain télégramme planifié et pour vérifier si le télégramme non planifié ayant la durée d'émission peut être transmis à l'intérieur de la fenêtre temporelle restante,
le nœud de distribution (CU1, CU2, CU3, CU4) étant configuré pour transmettre le télégramme non planifié par le biais de l'interface d'émission lorsque le télégramme non planifié ayant la durée d'émission peut être transmis à l'intérieur de la fenêtre temporelle restante de l'interface d'émission jusqu'à la transmission du prochain télégramme planifié,
le nœud de distribution (CU1, CU2, CU3, CU4) étant conçu pour introduire une première information de télégramme dans le champ de données des données de commande du télégramme non planifié avant la transmission du télégramme non planifié,
la première information de télégramme indiquant que le télégramme non planifié est transmis dans son intégralité, et
le nœud de distribution (CU1, CU2, CU3, CU4) étant configuré pour fragmenter le télégramme non planifié lorsque le télégramme non planifié ayant la durée d'émission ne peut pas être transmis à l'intérieur de la fenêtre temporelle restante de l'interface d'émission jusqu'à la transmission du prochain télégramme planifié, le nœud de distribution (CU1, CU2, CU3, CU4) étant conçu pour introduire une deuxième information de télégramme dans le champ de données (D-CU1, D-CU2, D-CU3, D-CU1*, D-CU2*, D-CU3*) des données de commande du télégramme non planifié avant la transmission du télégramme non planifié, la deuxième information de télégramme indiquant que le télégramme non planifié est fragmenté et comportant une identification de nœud de distribution supplémentaire qui sert à différencier les nœuds de distribution (CU1, CU2, CU3, CU4) individuels dans le réseau de communication d'automatisation.

9. Réseau de communication d'automatisation selon la revendication 8,
plusieurs nœuds de distribution (CU1, CU2, CU3, CU4) étant disposés entre le premier participant (T1) et le deuxième participant (T2),
un champ de données (D-CU1, D-CU2, D-CU3, D-CU1*, D-CU2*, D-CU3*) séparé des données de commande étant associé au nœud de distribution (CU1, CU2, CU3, CU4) respectif, que traite indépendamment le nœud de distribution (CU1, CU2, CU3, CU4) respectif,
le nœud de distribution (CU1, CU2, CU3, CU4) respectif étant configuré pour fragmenter le télégramme non planifié qui est transmis du deuxième participant (T2) au premier participant (T1) lorsque le télégramme non planifié ayant la durée d'émission respective ne peut pas être transmis à l'intérieur de la fenêtre temporelle restante de l'interface d'émission jusqu'à la transmission du prochain télégramme planifié par le nœud de distribution respectif du noeud de distribution (CU1, CU2, CU3, CU4) correspondant, et le nœud de distribution (CU1, CU2, CU3, CU4) respectif étant configuré pour introduire une deuxième information de télégramme dans le champ de données (D-CU1, D-CU2, D-CU3, D-CU1*, D-CU2*, D-CU3*) qui lui est associé des données de commande du télégramme non planifié,
la deuxième information de télégramme indiquant que le télégramme est fragmenté et comportant une identification de nœud de distribution supplémentaire, l'identification de nœud de distribution de la deuxième information de télégramme rendant notamment possible une association supplémentaire au télégramme non planifié correspondant,
le nœud de distribution (CU1, CU2, CU3, CU4) étant configuré pour incrémenter l'identification de nœud de distribution de la deuxième information de télégramme pour un nouveau télégramme non planifié, et
le nœud de distribution (CU1, CU2, CU3, CU4) respectif transmettant le télégramme non planifié en fragments.

10. Réseau de communication d'automatisation selon les revendications 8 à 9,
le nœud de distribution (CU1, CU2, CU3, CU4) respectif étant configuré pour noter un décalage de télégramme dans la deuxième information de télégramme, dans le champ de données (D-CU1, D-CU2, D-CU3, D-CU1*, D-CU2*, D-CU3*) qui lui est associé des données de commande du télégramme non planifié, lorsque le nœud de distribution (CU1, CU2, CU3, CU4) respectif fragmente le télégramme non planifié,
le décalage de télégramme indiquant une valeur n qui comprend une position d'un premier bloc de données utiles contenu dans le télégramme non planifié, et
le premier fragment de télégramme, notamment le décalage de télégramme, présentant la valeur n = 0.

11. Réseau de communication d'automatisation selon les revendications 8 à 10,
le nœud de distribution (CU1, CU2, CU3, CU4) respectif étant configuré pour consigner dans la deuxième information de télégramme, dans le champ de données (D-CU1, D-CU2, D-CU3, D-CU1*, D-CU2*, D-CU3*) qui lui est associé des données de commande du télégramme non planifié, que des fragments de télégramme supplémentaires sont encore à transmettre lorsque le nœud de distribution (CU1, CU2, CU3, CU4) respectif fragmente le télégramme non planifié.

12. Réseau de communication d'automatisation selon les revendications 8 à 11,
les télégrammes étant transmis sur un trajet de transmission de données fermé en partant du premier participant (T1) vers le deuxième participant (T2), sur un trajet aller, et en retour en partant du deuxième participant (T2) vers le premier participant (T1), sur un trajet de retour,
le premier participant (T1) disposé dans le premier segment de réseau (N1) étant réalisé sous la forme d'un participant maître, et
le deuxième participant (T2) disposé dans le deuxième segment de réseau (N2) étant réalisé sous la forme d'un participant esclave, le participant maître étant configuré pour déclencher l'échange de données entre le participant maître et le participant esclave sous la forme des télégrammes,
les télégrammes étant réalisés sous la forme des télégrammes planifiés ayant l'instant d'émission fixe pour la transmission par l'au moins un nœud de distribution (CU1, CU2, CU3, CU4), et sous la forme des télégrammes non planifiés sans l'instant d'émission fixe, le participant maître étant configuré pour générer un jeu de données d'en-tête (HEAD1, HEAD2, HEAD3) pour les télégrammes non planifiés à transmettre au participant esclave sur le trajet aller, lequel possède une portion de commande (TEL) et, rattaché à celle-ci, un champ de données de nœud de distribution (D-CU1, D-CU2, D-CU3) séparé pour chaque nœud de distribution (CU1, CU2, CU3, CU4) à traverser,
le nœud de distribution (CU1, CU2, CU3, CU4) étant conçu pour générer un jeu de données d'en-tête (HEAD4, HEAD5, HEAD6, HEAD7, HEAD8) pour les télégrammes non planifiés du participant esclave à transmettre sur le trajet de retour vers le participant maître, comportant une portion de commande (TEL) et un champ de données de nœud de distribution (D-CU1*, D-CU2*, D-CU3*) lorsque le télégramme non planifié sur le trajet de retour ne contient aucun jeu de données d'en-tête (HEAD4, HEAD5, HEAD6, HEAD7, HEAD8), et
les nœuds de distribution (CU1, CU2, CU3, CU4) suivants pour les télégrammes non planifiés à transmettre étant configurés pour compléter le jeu de données d'en-tête (HEAD4, HEAD5, HEAD6, HEAD7, HEAD8) du télégramme non planifié avec le champ de données de nœud de distribution (D-CU1*, D-CU2*, D-CU3*) associé au nœud de distribution (CU1, CU2, CU3) respectif.

13. Réseau de communication d'automatisation selon la revendication 12,
la portion de commande (TEL) du télégramme non planifié possédant une indication de longueur (TEL-LEN) du télégramme non planifié,
l'indication de longueur (TEL-LEN) du télégramme non planifié comprenant la longueur du jeu de données d'entête (HEAD1, HEAD2, HEAD3, HEAD4, HEAD5, HEAD6, HEAD7, HEAD8) et une longueur du bloc de données utiles du télégramme non planifié.

14. Réseau de communication d'automatisation selon la revendication 12 ou 13,
la portion de commande (TEL) du télégramme non planifié possédant un compteur qui, à partir du participant maître, indique le nombre de nœuds de distribution (CU1, CU2, CU3, CU4) à traverser par le télégramme non planifié jusqu'au participant esclave ou, à partir du participant esclave, le nombre de nœuds de distribution (CU1, CU2, CU3, CU4) à traverser par le télégramme non planifié jusqu'au participant maître,
le nœud de distribution (CU1, CU2, CU3, CU4) étant configuré pour décrémenter le compteur lors du passage du télégramme sur le trajet aller du participant maître au participant esclave, et le nœud de distribution (CU1, CU2, CU3, CU4) étant conçu pour incrémenter le compteur lors du passage du télégramme sur le trajet de retour du participant esclave au participant maître.

15. Réseau de communication d'automatisation selon les revendications 8 à 14,
les télégrammes planifiés étant réalisés sous la forme de télégrammes cycliques qui servent à la commande d'un système d'automatisation, et
les télégrammes non planifiés étant réalisés sous la forme de télégrammes acycliques.
